# EUROPÄISCHE PATENTSCHRIFT

(11) **EP 0 857 728 B1**
(45) Veröffentlichungstag und Bekanntmachung des Hinweises auf die Patenterteilung: **05.03.2003**
(21) Anmeldenummer: 98810061.6
(22) Anmeldetag: 29.01.1998
(51) Int. Cl.: C07F 7/18, C07F 7/12, C08L 83/00, C08L 43/00, C09K 19/40, G02F 1/1337

(54) **Photovernetzbare Silanderivate**
Photocrosslinkable silane derivatives
Dérivés de silanes photoréticulables

(30) Priorität: 05.02.1997 EP 97101757
(43) Veröffentlichungstag der Anmeldung: 12.08.1998
(73) Patentinhaber: Rolic AG, 6301 Zug (CH)
(72) Erfinder: Buchecker, Richard, Dr., 8008 Zürich (CH); Marck, Guy, 68440 Schlierbach (FR); Seiberle, Hubert, 79576 Weil am Rhein (DE)
(74) Vertreter: Liebetanz, Michael

(56) Entgegenhaltungen:
- EP-A- 0 611 786
- DE-A- 2 207 495
- FR-A- 1 337 516
- ALBANOV A I ET AL: "NMR study of (aroyloxymethyl) trifluorosilanes" J. ORGANOMET. CHEM. (JORCAI,0022328X);1983; VOL.244 (1); PP.5-16, XP002100089 Inst. Org. Chem.;Irkutsk; 664033; USSR (SU)
- HORNER L ET AL: "Chemie an starren Grenzflächen. 7. Ausgewählte Beispiele der chemischen Grenzflächenmodifizierung von Aerosil" Z. NATURFORSCH., B: CHEM. SCI. (ZNBSEN);1987; VOL.42 (5); PP.643-60, XP002100090 Univ. Mainz;Inst. Org. Chem.; Mainz; D-6500; Fed. Rep. Ger. (DE)
- CHEMICAL ABSTRACTS, vol. 107, no. 24, 14. Dezember 1987 Columbus, Ohio, US; abstract no. 219187, KOJIMA K ET AL: "Preparation and application of UV-curing silicone resins for hard coating agents" XP002100091 & KOGAKUBU KENKYU HOKOKU (CHIBA DAIGAKU) (CDKKAN,05776848);1987; VOL.38 (2); PP.33-9, Chiba Univ.;Coll. Eng.; Chiba; Japan (JP)
- CREED D ET AL: "Photochemical crosslinking of novel polycinnamate main-chain mesogens" MOL. CRYST. LIQ. CRYST. (MCLCA5,00268941);88; VOL.155 (PT. B); PP.57-71, XP002089501 Univ. South. Mississippi;Dep. Chem.; Hattiesburg; 39406; MS; USA (US)
- TOMITA H ET AL: "Command surfaces 15[1]. Photoregulation of liquid crystal alignment by cinnamoyl residues on a silica surface" LIQ. CRYST. (LICRE6,02678292);96; VOL.20 (2); PP.171-6, - Februar 1996 XP002089502 Tokyo Inst. Technology;Res. Lab. Resources Utilization; Yokohama; 226; Japan (JP)

## Beschreibung

Die Erfindung betrifft neue vernetzbare, photoaktive Silanderivate mit 3-Aryl-acrylsäureestern und -amiden, sowie deren Verwendung als Orientierungsschichten für Flüssigkristalle und zum Aufbau unstrukturierter bzw. strukturierter optischer Elemente und Mehrschichtsysteme.

Der Orientierungsschicht kommt in (elektro-optischen) Flüssigkristallvorrichtungen eine besondere Bedeutung zu. Sie dient dem Zweck, eine gleichmässige und störungsfreie Ausrichtung der Moleküllängsachsen zu gewährleisten.

Zur Orientierung von Flüssigkristallmolekülen in Flüssigkristallanzeigen (LCD's) verwendet man üblicherweise uniaxial geriebene Polymerorientierungsschichten wie z.B. Polyimid. Die Reibrichtung gibt bei diesem Prozess die Orientierungsrichtung vor. Mit dem Reiben sind jedoch einige gravierende Nachteile verbunden, die die optische Qualität von Flüssigkristallanzeigen stark beeinflussen können. So wird durch das Reiben Staub erzeugt, der zu optischen Fehlstellen im Display führen kann. Gleichzeitig wird die Polymerschicht elektrostatisch aufgeladen, was beispielsweise bei Thin Film Transistor (TFT)-TN-LCD's die Zerstörung der darunterliegenden Dünnschichttransistoren zur Folge haben kann. Aus diesen Gründen ist die Ausbeute an optisch einwandfreien Displays bei der LCD-Produktion bisher nicht optimal.

Ein weiterer Nachteil des Reibens besteht darin, dass es nicht möglich ist, auf einfache Weise strukturierte Orientierungsschichten herzustellen, da die Orientierungsrichtung beim Reiben nicht lokal variiert werden kann. Durch Reiben können somit hauptsächlich grossflächig einheitlich ausgerichtete Schichten hergestellt werden. Strukturierte Orientierungsschichten sind jedoch in vielen Bereichen der Displaytechnologie und der integrierten Optik von grossem Interesse. Beispielsweise lässt sich damit die Blickwinkelabhängigkeit von Twisted Nematic (TN)-LCD's verbessern.

Seit einiger Zeit sind Orientierungsschichten bekannt, bei denen die Orientierungsrichtung durch Bestrahlung mit polarisiertem Licht vorgegeben werden kann. Dadurch können die dem Reiben inhärenten Probleme umgangen werden. Zusätzlich besteht die Möglichkeit, die Orientierungsrichtung gebietsweise unterschiedlich vorzugeben und damit die Orientierungsschicht zu strukturieren.

Eine Möglichkeit der strukturierten Orientierung von Flüssigkristallen nutzt die Isomerisierungsfähigkeit bestimmter Farbstoffmoleküle aus, um photochemisch durch Einstrahlung mit polarisiertem Licht geeigneter Wellenlänge eine Vorzugsrichtung zu induzieren. Dies wird beispielsweise dadurch erreicht, dass man einem Orientierungspolymer einen Farbstoff zumischt, der dann mit polarisiertem Licht bestrahlt wird. Ein solches Guest/Host-System ist zum Beispiel in US-A-4,974,941 beschrieben. Bei diesem System werden Azobenzole in Polyimidorientierungsschichten eingemischt und anschliessend mit polarisiertem Licht bestrahlt. Flüssigkristalle, die mit der Oberfläche einer so belichteten Schicht in Kontakt sind, werden entsprechend dieser Vorzugsrichtung orientiert. Dieser Orientierungsprozess ist reversibel, d.h. durch nochmaliges Bestrahlen der Schicht mit Licht einer zweiten Polarisationsrichtung lässt sich die bereits eingeschriebene Richtung der Orientierung wieder umdrehen. Da dieser Umorientierungsprozess beliebig oft wiederholt werden kann, sind Orientierungsschichten auf dieser Basis für den Einsatz in LCD's weniger geeignet.

Eine weitere Möglichkeit zur Erzeugung hochaufgelöster Orientierungsmuster in flüssigkristallinen Schichten ist in Jpn. J. Appl. Phys. Vol. 31 (1992), 2155 beschrieben. Bei diesem Verfahren wird die durch Bestrahlung mit linear polarisiertem Licht induzierte Dimerisierung polymergebundener photoreaktiver Zimtsäuregruppen zur strukturierten Orientierung von Flüssigkristallen benutzt. Im Gegensatz zu dem oben beschriebenen reversiblen Orientierungsverfahren, wird bei den in Jpn. J. Appl. Phys. Vol. 31 (1992), 2155 beschriebenen photostrukturierbaren Orientierungsschichten ein anisotropes Polymernetzwerk aufgebaut. Diese photoorientierten Polymernetzwerke sind überall dort einsetzbar, wo strukturierte oder unstrukturierte Flüssigkristallorientierungsschichten benötigt werden. Ausser in LCD's kann man solche Orientierungsschichten beipielsweise auch zur Herstellung von sogenannten Hybridschichten verwenden, wie dies in den europäischen Patentanmeldungen EP-A- 0 611 981, EP-A- 0 689 084, EP-A-0689 065 und in der schweizerischen Patentanmeldung No. 2036/95 exemplifiziert wird. Mit diesen Hybridschichten aus photostrukturierten Orientierungspolymeren und vernetzbaren niedermolekularen Flüssigkristallen lassen sich optische Elemente wie etwa nichtabsorptive Farbfilter, Linear- und Zirkularpolarisatoren, optische Verzögerungsschichten, usw. verwirklichen.

In EP-A-611,786 sind Zimtsäurepolymere, die sich prinzipiell zum Aufbau von solchen anisotrop vernetzten, photostrukturierten Orientierungsschichten für Flüssigkristalle eignen, beschrieben. Diese vernetzbaren Zimtsäurederivate sind grundsätzlich über die Carboxylfunktion der Zimtsäure (Phenylacrylsäure) und einen Spacer an die Polymerhauptkette angeknüpft. Die bisher verwendeten Photopolymere dieses Typs zeigen jedoch eine Anzahl gravierender Nachteile. So wirken sich beispielsweise photochemische Konkurrenzreaktionen störend auf die Orientierungsfähigkeit aus. Zudem besitzen die bekannten Zimtsäurepolymere nur eine ungenügende photochemische Langzeitstabilität. Beispielsweise führt eine längere UV-Licht Bestrahlung einer vorgefertigten Orientierungsschicht zur Zerstörung der ursprünglich vorhandenen Orientierung. Mehrfachbelichtungen, bei denen eine bereits bestehende Orientierungsschicht mit einem vorgegebenen eingeschriebenen Muster ein weiteres Mal belichtet wird, um die noch unbelichteten Bereiche in eine andere Richtung zu orientieren, können nur durchgeführt werden, wenn die zuvor belichteten Stellen durch eine Maske abgedeckt werden. Ansonsten können die bereits orientierten Bereiche der Schicht ihre Struktur durch photochemische Nebenreaktionen ganz oder teilweise wieder verlieren.

Ein weiterer Nachteil der bisher verwendeten Zirntsäurepolymere besteht darin, dass bei den durch eine einfache Belichtung mit polarisiertem Licht hergestellten Orientierungsoberflächen aus diesen Materialien kein Kippwinkel auftritt. Insbesondere für den Einsatz in LCD's muss aber neben der Orientierungsrichtung auch ein Kippwinkel durch die Orientierungsschicht vermittelt werden.

Bei den oben erwähnten uniaxial geriebenen Polymerorientierungsschichten wird dieser Kippwinkel bereits beim Reibprozess auf der Polymeroberfläche erzeugt. Bringt man einen Flüssigkristall in Kontakt mit einer solchen Oberfläche, so liegen die Flüssigkristallmoleküle nicht parallel sondern geneigt zur Oberfläche, der Kippwinkel wird also auf den Flüssigkristall übertragen. Die Grösse des Kippwinkels wird dabei sowohl durch Reibparameter wie etwa Vorschubgeschwindigkeit und Anpressdruck sowie durch die chemische Struktur des Polymers bestimmt. Für die Herstellung von Flüssigkristallanzeigen sind je nach Typ Kippwinkel zwischen 1° und 15° erforderlich. Die grösseren Kippwinkel werden insbesondere für Supertwisted Nematic (STN) LCD's benötigt, um das Entstehen von sogenannten Fingerprint-Texturen zu vermeiden. In TNund TFT-TN-LCD's wird durch den Kippwinkel die Dreh- und die Kipprichtung definiert, wodurch "Reverse Twist"- und "Reverse Tilt "-Phänomene verhindert werden. Während Reverse Twist im ungeschalteten Zustand Gebiete mit falschem Drehsinn zur Folge hat, was sich optisch in fleckigem Aussehen der Anzeige bemerkbar macht, macht sich Reverse Tilt vor allem beim Schalten des LCD's durch Verkippen der Flüssigkristalle in unterschiedliche Richtungen optisch sehr störend bemerkbar. Reverse Twist lässt sich durch Dotieren der Flüssigkristallmischung mit einem chiralen Dotierstoff geeigneter Drehrichtung verhindern. Zur Unterdrückung von Reverse Tilt gibt es bisher jedoch keine alternative Möglichkeit zum Einsatz von Orientierungsschichten mit Kippwinkel.

Vor kurzem wurde in Liq. Cryst. 20, 171(1996) über Zimtsäureester berichtet, welche nicht, wie oben beschrieben, an ein Polymergerüst gebunden, sondern die über den Spacer mit einer Trialkoxysilangruppe verknüpft sind. Hierbei dient die Trialkoxysilangruppe zur Verankerung der Zimtsäureeinheit auf dem Subsrat als Träger, beispielsweise auf Glas. Der Spacer, welcher die Trialkoxysilangruppe mit dem Zimtssureester verknüpft, ist dabei stets in 2-Stellung (ortho-Stellung) des Zimtsäureesters angebracht. Zur Herstellung der Orientierungsschicht werden die Trialkoxysilane zunächst aus einer Lösung auf den Glasträger aufgezogen. Danach erfolgt die Orientierung durch Bestrahlung mit linear polarisiertem Licht von 259 nm Wellenlänge. Die Fähigkeit der so zubereiteten Schicht zur Orientierung von Flüssigkristallen wird einer reversiblen Z/E Isomerisierung zugeschrieben. Werden die Zimtsäuremoleküle hingegen bei 330 nm bestrahlt, werden sie vernetzt. Dabei geht die Orientierungsfähigkeit proportional zum Vernetzungsgrad verloren.

Die auf diese Weise hergestellten Orientierungsschichten besitzen dieselben Nachteile, welche die weiter oben beschriebenen Zimtsäurepolymere aufweisen. Auch sie weisen eine ungenügende photochemische und thermische Stabilität auf, da die Z/E-Isomerisierung reversibel ist und führen daher zu Problemen der Umorientierung bei Mehrfachbelichtung. Zudem besitzen auch sie die Fähigkeit nicht, Kippwinkel zu induzieren.

Der Erfindung lag daher die Aufgabe zugrunde, photoreaktive Silane herzustellen, die die oben geschilderten Nachteile der bisher verwendeten Zimtsäurepolymere und Silane, d.h. die fehlende photochemische Langzeitstabilität und vor allem den fehlenden Tiltwinkel nach Bestrahlung mit polarisiertem Licht nicht aufweisen und damit zur Erzeugung stabiler hochaufgelöster Orientierungsmuster befähigt sind.

Überraschenderweise wurde nun gefunden, dass Silane, welche über einen Spacer mit der Carbonyl oder der Carboxylfunktion mit 3-Arylacrylsäurederivaten als photoreaktiver Einheit verknüpft sind, diese Bedingung erfüllen und sich hervorragend als Orientierungsschichten für Flüssigkristalle eignen. Die Vernetzung dieser Verbindungen mit linear polarisiertem Licht führt zu einer bedeutend höheren photochemischen Stabilität der Orientierungsschicht und gleichzeitig zu einer ausgezeichneten Orientierung der Flüssigkristalle, die sich beispielsweise durch einen sehr guten Kontrast auszeichnet. Zudem können beim Belichten mit linear polarisiertem Licht Tiltwinkel erzeugt werden.

Gegenstand der vorliegenden Erfindung sind Silane der allgemeinen Formel I: 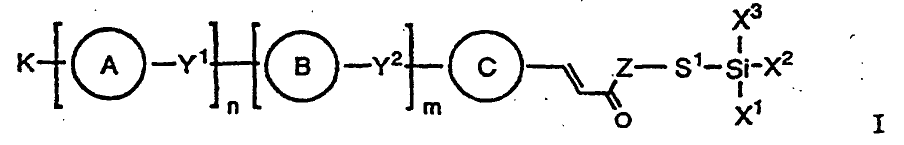 worin
- X¹, X², X³: Alkyl, Alkoxy oder Halogen bedeuten, jedoch mindestens einer dieser Reste entweder Alkoxy oder Halogen ist;
- S¹: eine Spacereinheit, wie eine gegebenenfalls einfach oder mehrfach mit Fluor-, Chlor- oder Cyano-substituierte geradkettige oder verzweigte Alkylengruppierung -(CH₂)ᵣ-, oder eine Kette der Formel -(CH₂)ᵣ-L-(CH₂)ₛ-, wobei L eine Einfachbindung oder verknüpfende funktionelle Gruppen wie O, COO, OOC, NR¹, NR¹-CO-, CO-NR¹, NR¹-COO, OCO-NR¹, NR¹-CO-NR¹, -CH=CH-, -C≡C-, R¹ Wasserstoff oder niederes Alkyl bedeuten und r und s jeweils eine ganze Zahl von 1 bis 20 darstellt mit der Massgabe, dass r + s ≤ 25 ist;
- Ring A: unsubstituiertes oder mit Fluor, Chlor, Cyano, Alkyl oder Alkoxy substituiertes Phenylen, Pyridin-2,5-diyl, Pyrimidin-2,5-diyl, 1,3-Dioxan-2,5-diyl, Cyclohexan-1,4-diyl, Piperidin-1,4-diyl oder Piperazin-1,4-diyl, wobei der Alkyl und/oder der Alkoxy-Substituent durch Fluor ein-oder mehrfach substituiert sein kann;
- Ring B: unsubstituiertes oder mit Fluor, Chlor, Cyano, Alkyl oder Alkoxy substituiertes Phenylen, Pyridin-2,5-diyl, Pyrimidin-2,5-diyl, 1,4- bzw. 2,6-Naphthylen, 1,3-Dioxan-2,5-diyl oder Cyclohexan-1,4-diyl, wobei der Alkyl undloder der Alkoxy-Substituent durch Fluor ein-oder mehrfach substituiert sein kann;
- K: Wasserstoff, Fluor, Chlor, Cyano, Nitro oder eine gegebenenfalls mit Fluor, Chlor, Cyano oder Nitro substituierte geradkettige oder verzweigte Alkyl-, Alkoxy-Alkyl-COO-, Alkyl-CO-NR² oder Alkyl-OCO-Gruppe mit 1 bis 20 Kohlenstoffatomen in der gegebenenfalls eine CH₂ Gruppe oder mehrere nicht benachbarte CH₂ Gruppen durch O, CH=CH oder C≡C ersetzt sein können und worin R² Wasserstoff oder niederes Alkyl;
- Y¹, Y²: unabhängig voneinander eine einfache Kovalenzbindung, -(CH₂)ₜ-, -O-, -CO-, -CO-O-, -O-OC-, -NR³-, -CO-NR³-, -R³N-CO-, -(CH₂)ᵤ-O-, -O-(CH₂)ᵤ-, -(CH₂)ᵤ-NR³- oder -NR³-(CH₂)ᵤ-, worin
- R³: Wasserstoff oder niederes Alkyl;
- t: eine ganze Zahl von 1 bis 4;
- u: eine ganze Zahl von 1 bis 3;
- m, n: unabhängig voneinander 0 oder 1;
- Ring C: unsubstituiertes oder mit Fluor, Chlor, Cyano, Alkyl oder Alkoxy substituiertes Phenylen, Pyrimidin-2,5- oder 3,5-diyl, Pyridin-2,5- oder -2,4-diyl oder -2,6-diyl, 2,5-Thiophenylen, 2,5-Furanylen, 1,4- oder 2,6-Naphthylen, wobei der Alkyl und/oder der Alkoxy-Substituent durch Fluor ein-oder mehrfach substituiert sein kann;
- Z: -O- oder -NR⁴-, und R⁴ Wasserstoff oder niederes Alkyl;
bedeuten.

Die erfindungsgemässen photovernetzbaren Silan Derivate der Formel I können einzeln oder in Gemischen zur Bildung von Orientierungsschichten verwendet werden. Geeignete Gemische enthalten neben einer oder mehreren Verbindungen der Formel I gegebenenfalls auch andere, unvernetzbare Silan Derivate, wie sie für die Silanisierung von anorganischen, oxydhaltigen Oberflächen üblich sind. Solche unvernetzbaren Silan Derivate sind beispielsweise Verbindungen der allgemeinen Formel II 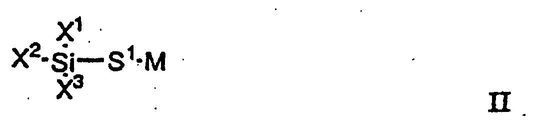 worin X¹, X², X³ und S¹ die unter Formel I angegebene Bedeutung haben und M einen mesogenen Rest, niederes Alkyl, durch Fluor ein-oder mehrfach substituiertes niederes Alkyl, niederes Alkoxy oder durch Fluor ein-oder mehrfach substituiertes niederes Alkoxy bedeutet.

Solche Gemische, die mindestens ein photovernetzbares Silanderivat der allgemeinen Formel I enthalten, sind ebenfalls Gegenstand der vorliegenden Erfindung.

Der Ausdruck "mesogener Rest" bedeutet im Rahmen der vorliegenden Erfindung eine Gruppe entsprechend der allgemeinen Formel III 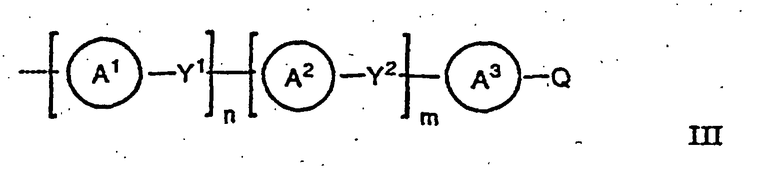 worin die Ringe
- A¹, A², A³: unsubstituiertes oder mit Fluor, Chlor, Cyano, Alkyl oder Alkoxy substituiertes Phenylen, Pyridin-2,5-diyl, pyrimidin-2,5-diyl, 2,6-Naphthylen, 1,3-Dioxan-2,5-diyl, Cyclohexan-1,4-diyl, wobei der Alkyl und/oder der Alkoxy-Substituent durch Fluor ein-oder mehrfach substituiert sein kann und wobei höchstens eier der Ringe von Phenylen oder Cyclohexylen verschieden ist;
- Q: niederes Alkyl oder Alkoxy, worin eines oder mehrere Wasserstoffatome durch Fluor ersetzt sein können, Fluor, Chlor, Cyano oder Nitro;
- n, m, Y¹, Y²: die unter Formel I angegebene Bedeutung haben.

Vorzugsweise bedeutet M in Verbindungen der Formel II niederes Alkyl oder niederes Alkoxy oder einen mesogenen Rest der Formel III worin n für 0 und m für 0 oder 1 stehen und die Ringe A¹, A² und A³ Phenylen oder Cyclohexylen; Y¹, Y² eine einfache Kovalenzbindung, -CH₂CH₂-, -O-, -CH₂-O-, -O-CH₂-, -CO-O- oder -O-OC- und Q gegebenenfalls mit Fluor substituiertes niederes Alkyl oder niederes Alkoxy, Fluor, Chlor oder Cyano bedeuten.

Ganz besonders bevorzugt sind Verbindungen der Formel II, in denen M niederes Alkyl, niederes Alkoxy oder einen Rest der Formel III bedeutet, in dem m und n für 0 stehen und Q gegebenenfalls mit Fluor substituiertes niederes Alkyl oder niederes Alkoxy ist.

Der Anteil an Silan Derivaten in den erfindungsgemässen Mischungen, die nicht einer Struktur der Formel I entsprechen, ist kleiner oder gleich 50 %, vorzugsweise kleiner oder gleich 30 %, insbesondere jedoch kleiner oder gleich 15 %.

Gegenstand der vorliegenden Erfindung ist auch die Verwendung der erfindungsgemässen Silanderivate der Formel I oder die Verwendung von Mischungen aus Silanderivaten der Formel I und II zur Herstellung von Orientierungsschichten für Flüssigkristalle, sowie deren Verwendung in optischen Bauelementen, insbesondere zur Herstellung von Hybridschichtelementen.

Der Ausdruck "niederes Alkyl" fiir sich alleine genommen oder in Kombination wie "niederes Alkoxy" bezeichnet geradkettige und verzweigte gesättigte Kohlenwasserstoffreste mit 1 bis 6, vorzugsweise mit 1 bis 3 Kohlenstoffatomen, wie Methyl, Ethyl, Propyl oder i-Propyl und dergleichen.

Der Ausdruck "Alkyl" für sich alleine genommen oder in Kombination wie "Alkoxy", bezeichnet geradkettige und verzweigte gesättigte Kohlenwasserstoff-Reste mit bis zu 30 Kohlenstoffatomen.

Bevorzugte "Spacereinheiten" sind im Rahmen der vorliegenden Erfindung eine geradkettige oder verzweigte Alkylengruppierung, repräsentiert durch -(CH₂)ᵣ-, sowie -(CH₂)ᵣ-O-(CH₂)ₛ-, -(CH₂)ᵣ-COO-(CH₂)ₛ-, -(CH₂)ᵣ-OOC-(CH₂)ₛ-, -(CH₂)ᵣ-NR¹-CO-(CH₂)ₛ-, -(CH₂)ᵣ-NR¹-COO-(CH₂)ₛ-, wobei r und s je eine ganze Zahl von 1 bis 20, insbesondere jedoch 2 bis 12 ist, mit der Massgabe, dass r + s ≤ 20, insbesondere ≤ 15 und worin R¹ Wasserstoff oder niederes Alkyl bedeutet.

Beispiele von bevorzugten "Spacereinheiten" sind 1,2-Ethylen, 1,3-Propylen, 1,4-Butylen, 1,5-Pentylen, 1,6-Hexylen, 1,7-Heptylen, 1,8-Octylen, 1,9-Nonylen, 1,10-Decylen, 1,11-Undecylen, 1,12-Dodecylen, 1,3-Butylen, 3-Methyl-1,3-butylen, 3-Propylenoxy-6-hexylen, 3-Bropylencarbamoyloxy-6-hexylen, 3-Propylencarbonyloxy-6-hexylen, -6-hexylen, 3-Propylenoxycarbonyl-6-hexylen, 3-Propylencarbonylamino-6-hexylen, Propylencarbamoylhexylen, und dergleichen.

Besonders bevorzugte "Spacereinheiten" sind eine geradkettige Alkylengruppierung repräsentiert durch -(CH₂)ᵣ-, sowie -(CH₂)ᵣ-NH-CO-(CH₂)ₛ-, -(CH₂)ᵣ-NH-COO-(CH₂)ₛ-, wobei r und s je eine ganze Zahl von 2 bis 12 und die Summe von r + s ≤ 15 ist.

Der Ausdruck "unsubstituiertes oder gegebenenfalls mit Fluor, Chlor, Cyano, Alkyl oder Alkoxy substituiertes Phenylen" umfasst im Rahmen der vorliegenden Erfindung unsubstituiertes bzw. mit Fluor, Chlor, Cyano, Alkyl oder Alkoxy, vorzugsweise mit Fluor, Methyl, Ethyl, Propyl, Butyl, Methoxy, Ethoxy, Propoxy, Butoxy oder Cyano einfach oder mehrfach substituiertes 1,3- oder 1,4-Phenylen.

Beispiele bevorzugter Phenylenreste sind 1,3-, bzw. 1,4-Phenylen, 4-bzw. 5-Methyl-1,3-phenylen, 4- bzw. 5-Methoxy-1,3-phenylen, 4- bzw. 5-Ethyl-1,3-phenylen, 4- bzw. 5-Ethoxy-1,3-phenylen, 2- bzw. 3-Methyl-1,4-phenylen, 2- bzw. 3-Ethyl-1,4-phenylen, 2- bzw. 3-Propyl-1,4-phenylen, 2- bzw. 3-Butyl-1,4-phenylen, 2- bzw. 3-Methoxy-1,4-phenylen, 2- bzw. 3-Ethoxy-1,4-phenylen, 2- bzw. 3-Propoxy-1,4-phenylen, 2- bzw. 3-Butoxy-1,4-phenylen, 2,3-, 2,6- bzw. 3,5-Dimethyl-1,4-phenylen, 2,6- bzw. 3,5-Dimethoxy-1,4-phenylen, 2- bzw. 3-Fluor-1,4-phenylen, 2,3-, 2,6- bzw. 3,5-Difluor-1,4-phenylen, 2- bzw. 3-Chlor-1,4-phenylen, 2,3-, 2,6- bzw. 3,5-Dichlor-1,4-phenylen, 2- bzw. 3-Cyano-1,4-phenylen und dergleichen.

Bevorzugte Substituenten K sind im Rahmen der vorliegenden Erfindung Wasserstoff, Fluor, Chlor, Cyano, Nitro sowie Alkyl-, Alkoxy-, Alkyl-COO-, Alkyl-CONR² oder Alkyl-OCO-Gruppen, in denen der Alkylrest geradkettig oder verzweigt, gegebenenfalls mindestens einfach mit Fluor substituiert ist, die Zahl der Kohlenstoffatome 1-15 beträgt und R² für Wasserstoff oder niederes Alkyl steht.

Bevorzugt sind diejenigen Silanderivate der Formel I, worin X¹, X², X³, S¹, K, m und n die unter Formel I angegebene Bedeutung haben und
- Ring A: unsubstituiertes oder mit Fluor, Chlor, Cyano, Alkyl oder Alkoxy substituiertes Phenylen, Pyridin-2,5-diyl, Pyrimidin-2,5-diyl oder Cyclohexan-1,4-diyl, wobei der Alkyl und/oder der Alkoxy-Substituent durch Fluor ein-oder mehrfach substituiert sein kann;
- Ring B: unsubstituiertes oder mit Fluor, Chlor, Cyano, Alkyl oder Alkoxy substituiertes Phenylen, Pyridin-2,5-diyl, Pyrimidin-2,5-diyl, 1,4- bzw. 2,6-Naphthylen oder Cyclohexan-1,4-diyl, wobei der Alkyl und/oder der Alkoxy-Substituent durch Fluor ein-oder mehrfach substituiert sein kann;
- Y¹, Y²: unabhängig voneinander eine einfache Kovalenzbindung, -CH₂CH₂-, -O-, -CH₂-O-, -O-CH₂-, -CO-O- oder -O-OC-;
- Ring C: unsubstituiertes oder mit Fluor, Chlor, Cyano, Alkyl oder Alkoxy substituiertes 1,3- oder 1,4-Phenylen, Pyrimidin-2,5-diyl, Pyridin-2,5-diyl, 2,5-Furanylen oder 1,4- oder 2,6-Naphthylen, wobei der Alkyl und/oder der Alkoxy-Substituent durch Fluor ein-oder mehrfach substituiert sein kann;
- Z: -O-;
bedeuten.

Besonders bevorzugt sind diejenigen Silanderivate der Formel I, worin X¹, X², X³, S¹, K und m die unter Formel I angegebene Bedeutung haben und
- n: 0;
- Ring B: unsubstituiertes oder mit Fluor, Chlor, Cyano, Alkyl oder Alkoxy substituiertes Phenylen, Pyridin-2,5-diyl, Pyrimidin-2,5-diyl oder Cyclohexan-1,4-diyl, wobei der Alkyl und/oder der Alkoxy-Substituent durch Fluor ein-oder mehrfach substituiert sein kann;
- Y²: eine einfache Kovalenzbindung, -CO-O- oder -CH₂-O-;
- Ring C: unsubstituiertes oder mit Fluor, Chlor, Cyano, Alkyl oder Alkoxy substituiertes 1,3- oder 1,4-Phenylen oder 1,4- oder 2,6-Naphthylen, wobei der Alkyl und/oder der Alkoxy-Substituent durch Fluor ein-oder mehrfach substituiert sein kann;
- Z: -O-;
bedeuten.

Die Silanderivate der Formel I zeichnen sich dadurch aus, dass sie einfach zugänglich sind. Die Methoden zur Herstellung sind dem Fachmann an sich bekannt. So können beispielsweise Vorläufer zu den Verbindungen der Formel I, welche anstelle der Silangruppe am Ende des Spacers S¹ eine terminale Doppelbindung aufweisen, mit käuflichen Silanen der Formel X¹X²X³SiH durch Hydrosilylierung zu den Verbindungen der Formel I umgesetzt werden. Eine weitere Herstellungsmethode besteht darin, dass man ein Silan der Formel X¹X²X³Si-(CH₂)ᵣ-N=C=O mit einer Hydroxy- oder Aminoverbindung, bei der sich die Hydroxyl- bzw. die Aminogruppe an der gewünschten Verknüpfungsstelle im Spacer befindet, umsetzt. Dadurch entstehen diejenigen Verbindungen der Formel I, welche im Spacer eine N-CO-O- bzw. N-CO-N-Gruppierung aufweisen. Durch Umsatz der oben erwähnten Hydroxy- oder Aminoverbindungen mit Silanen der Formel X¹X²X³Si-(CH₂)ᵣ-Br lassen sich andererseits diejenigen Verbindungen der Formel I herstellen, die im Spacer eine Aetherfunktion bzw. eine Alkylaminogruppe aufweisen. Durch Umsatz von Silanen der Formel X¹X²X³Si-(CH₂)ᵣ-NHR¹ mit einem Säurechlorid lassen sich diejenigen Silane der Formel I herstellen, welche über eine NR¹CO Gruppe im Spacer verfügen. Durch Umsatz der Säurechloride der Zimtsäurevorstufe mit Silanen der Formel X¹X²X³Si-(CH₂)ᵣNHR¹ besteht, neben der Hydrosilylierung der entsprechenden Alkenylamide, eine weitere Möglichkeit, um Zimtsäureamide der Formel I herzustellen in denen Z für NR⁴ und S¹ für -(CH₂)ᵣ- stehen. Solche Herstellungsmethoden sind anhand analoger Beispiele in US 4,918,200 und US 4,861906 beschrieben worden.

Die Silan-Vorstufen sind grösstenteils im Handel erhältlich oder können leicht aus käuflichen Silan-Bausteinen modifiziert werden. Die Zimtsäuren sind teilweise ebenfalls käuflich oder können nach literaturbekannten Verfahren wie etwa der Knoevenagel- oder der Wittig-Reaktion aus käuflichen Aldehyden oder aus Cyano-Verbindungen, durch vorherige Reduktion zu den entsprechenden Aldehyden, erhalten werden. Die Zimtsäureester oder Amide können dann aus den Zimtsäuren nach bekannten Veresterungsverfahren hergestellt werden.

Zur Herstellung von Orientierungsschichten müssen die erfindungsgemässen Silanderivate oder Gemische zunächst auf einen Träger aufgebracht werden. In der Folge werden die Silangruppen als Kopplungseinheiten an den Träger gebunden und bilden ausgesprochen dünne, oft monomolekulare Schichten. Solche Silanisierungen verschiedener, meist anorganischer Oxyde sind in der Praxis weit verbreitet und dem Fachmann durchaus geläufig. Beispiele bekannter Trägermaterialien sind Aluminiumoxyd, Titanoxyd, Siliziumoxyd (Glas oder Quarz) oder Mischoxyde wie beispielsweise Indium-Zinnoxyd (ITO). Bei den erfindungsgemässen Anwendungen für optische oder elektro-optische Vorrichtungen stehen vor allem Glas oder gegebenenfalls ein mit einer Elektrode beschichteter Träger (z.B. mit Indium-Zinn-Oxid (ITO) beschichtete Glasplatte) als Trägermaterialien im Vordergrund. Für das Aufbringen werden die Silan Derivate vorwiegend als Lösungen in einem inerten Lösungsmittel verwendet. Je nach Reaktivität der Silan-Gruppe ist eine grosse Anzahl von verschiedenen Lösungsmitteln verwendbar wie beispielsweise Benzol, Toluol, Hexan usw. oder bei den weniger reaktiven Alkoxysilanen auch Alkohole wie Methanol, Ethanol und dergleichen. Die anschliessende Beschichtung kann beispielsweise durch Eintauchen des gereinigten Trägers in die Lösung, durch Spincoating aber auch durch andere Beschichtungstechniken erfolgen. Nach dem Verflüchtigen des Lösungsmittels von der Trägerschicht erfolgt die Kopplung der Silangruppe an den Träger je nach Reaktivität meist durch Erwärmung des imprägnierten Trägers. Anschliessend können die ungebundenen Silan Anteile mit Lösungsmitteln ausgewaschen werden.

Die Schichten, welche aus Silanderivaten der Formel I oder aus Gemischen enthaltend Silanderivate der Formel I auf diese oder analoge Weise hergestellt wurden, können durch Bestrahlung mit linear polarisiertem Licht dimerisiert werden. Durch die räumlich selektive Bestrahlung der an den Träger gekoppelten Moleküleinheiten der Formel I können nun ganz bestimmte Bereiche einer Oberfläche ausgerichtet und durch die Dimerisierung gleichzeitig auch stabilisiert werden.

So können zur Herstellung von Orientierungsschichten in selektiv flächig begrenzten Bereichen die zu orientierenden Bereiche z.B. mit einer Quecksilber-Hochdruck-Lampe, einer Xenonlampe oder einem gepulsten UV-Laser unter Verwendung eines Polarisators und gegebenenfalls einer Maske zur Abbildung von Strukturen belichtet werden. Die Belichtungsdauer ist abhängig von der Leistung der einzelnen Lampen und kann von wenigen Minuten bis zu mehreren Stunden variieren. Die Dimerisierung kann aber auch durch Bestrahlung der homogenen Schicht unter Verwendung von Filtern, die z.B. nur die für die Vernetzungsreaktion geeignete Strahlung hindurchlassen, erfolgen.

Die erfindungsgemässen photovernetzbaren Silanderivate der Formel I werden durch die folgenden Beispiele 1-5 weiter veranschaulicht.

Die Herstellung einer photovernetzbaren Schicht zeigt Beispiel 6.

Beispiele 7 und 8 zeigen die Herstellung einer Orientierungsschicht für Flüssigkristalle.

### Beispiel 1:

### (E)-3,4-Dimethoxyzimtsäure 6-(3-triethoxysilanylpropylcarbamoyloxy)hexylester

Ein Gemisch von 0.45 g (E)-3,4-Dimethoxyzüntsäure 6-hydroxyhexylester, 20 ml Methylenchlorid, 0.36 ml 3-Triethoxysilanylpropylisocyanat und 0,009 ml Dibutylzinndilaurat wurde während 19 Std. unter Rückfluss erhitzt. Danach wurde die Reaktionslösung eingedampft und der Rückstand durch Chromatographie an 150 g Kieselgel mit Toluol/Essigester 3:1 gereinigt. Dies ergab 0.470 g (E)-3,4-Dimethoxyzimtsäure 6-(3-triethoxysilanylpropylcarbamoyloxy)hexylester, lmax. (CH₂Cl₂): 322 nm (e = 19027).

Der als Ausgansmaterial verwendete (E)-3,4-Dimethoxyzimtsäure 6-hydroxyhexylester wurde wie folgt hergestellt:

### (E)-3,4-Dimethoxyzimtsäure 6-hydroxyhexylester

Zu einer Lösung von 1.0 g (E)-3,4-Dimethoxyzimtsäure in 10 ml Dimethylformamid wurde innert 10 Min. bei Raumtemperatur eine Lösung bestehend aus 0.72 ml 1,8-Diazabicyclo [5.4.0] undec-7-ene (1,5-5) und 5 ml Dimethylformamid getropft. Hierauf wurde das Reaktionsgemisch auf 80°C erhitzt, dann nacheinander 0.18 g Tetrabutylammoniumiodid und 0.71 ml 6-Chlorhexanol zugfügt und anschliessend während 19 Std. reagieren gelassen. Danach wurde das Reaktionsgemisch auf Raumtemperatur abgekühlt, zwischen Diethylether und 1N Salzsäure verteilt und die organische Phase mehrmals mit ges. Natriumchloridlösung gewaschen. Hierauf wurde die organische Phase über Magnesiumsulfat getrocknet, filtriert und eingedampft. Chromatographie des Rückstandes an 150 g Kieselgel mit Toluol/Essigester 3:2 ergab 1.35 g (E)-3,4-Dimethoxyzimtsäure 6-hydroxyhexylester.

In analoger Weise lassen sich folgende Silane synthetisieren:
(E)-2-Methoxyzimtsäure 6-(3-triethoxysilanylpropylcarbamoyloxy)hexylester;
(E)-3-Methoxyzimtsäure 6-(3-triethoxysilanylpropylcarbamoyloxy)hexylester;
(E)-3-Methoxyzimtsäure 6-(3-triethoxysilanylpropylcarbamoyloxy)hexylester;
(E)-4-Octyloxyzimtsäure 6-(3-triethoxysilanylpropylcarbamoyloxy)hexylester;
(E)-4-Ethoxyzimtsäure 6-(3-triethoxysilanylpropylcarbamoyloxy)hexylester;
(E)-4-Propyloxyzintsäure 6-(3-triethoxysilanylpropylcarbamoyloxy)hexylester;
(E)-4-Butyloxyzimtsäure 6-(3-triethoxysilanylpropylcarbamoyloxy)hexylester;
(E)-4-Pentyloxyzimtsäure 6-(3-triethoxysilanylpropylcarbamoyloxy)-hexylester;
(E)-4-Hexyloxyzimtsäure 6-(3-triethoxysilanylpropylcarbamoyloxy)hexylester;
(E)-4-Dodecyloxyzimtsäure 6-(3-triethoxysilanylpropylcarbamoyloxy)hexylester;
(E)-3-Fluorzimtsäure 6-(3-triethoxysilanylpropylcarbamoyloxy)hexylester;
(E)-4-Fluorzimtsäure 6-(3-triethoxysilanylpropylcarbamoyloxy)hexylester;
(E)-3-Chlorzimtsäure 6-(3-triethoxysilanylpropylcarbamoyloxy)hexylester;
(E)-4-Chlorzimtsäure 6-(3-triethoxysilanylpropylcarbamoyloxy)hexylester;
(E)-4-Trifluormethoxyzimtsäure 6-(3-triethoxysilanylpropylcarbamoyloxy)hexylester;
(E)-4-Acetamidozimtsäure 6-(3-triethoxysilanylpropylcarbamoyloxy)hexylester;
(E)-4-Pentanoylaminozimtsäure 6-(3-triethoxysilanylpropylcarbamoyloxy)hexylester;
(E)-4-Decanoylaminozimtsäure 6-(3-triethoxysilanylpropylcarbamoyloxy)hexylester;
(E)-3,5-Dimethoxyzimtsäure 6-(3-triethoxysilanylpropylcarbamoyloxy)hexylester;
(E)-2,5-Dimethoxyzimtsäure 6-(3-triethoxysilanylpropylcarbamoyloxy)hexylester;
(E)-3-Methoxy-4-propyloxyzimtsäure 6-(3-triethoxysilanylpropylcarbamoyloxy)hexylester;
(E)-3-Methoxy-4-octyloxyzimtsäure 6-(3-triethoxysilanylpropylcarbamoyloxy)hexylester;
(E)-3-Decyloxy-4-methoxyzimtsäure 6-(3-triethoxysilanylpropylcarbamoyloxy)hexylester;
(E)-3-Fluor-4-methoxyzimtsäure 6-(3-triethoxysilanylpropylcarbamoyloxy)hexylester;
(E)-3-Chlor-4-methoxyzimtsäure 6-(3-triethoxysilanylpropylcarbamoyloxy)hexylester;
(E)-3-Propyl-4-methoxyzimtsäure 6-(3-triethoxysilanylpropylcarbamoyloxy)hexylester;
(E)-3,4,5-Trimethoxyzimtsäure 6-(3-triethoxysilanylpropylcarbamoyloxy)hexylester;
(E)-3,4,5-Trimethoxyzimtsäure 6-(3-triethoxysilanylpropylcarbamoyloxy)hexylester;
(E)-3,4-Difluorzimtsäure 6-(3-triethoxysilanylpropylcarbamoyloxy)hexylester;
(E)-3,4,5-Trifluorzimtsäure 6-(3-triethoxysilanylpropylcarbamoyloxy)hexylester;
(E)-3-Fluor-4-chlorzimtsäure 6-(3-triethoxysilanylpropylcarbamoyloxy)hexylester;
(E)-3-Ethoxy-4-acetamidozimtsäure 6-(3-triethoxysilanylpropylcarbamoyloxy)hexylester;
(E)-4-(4-Methoxybenzoyloxy)zimtsäure 6-(3-triethoxysilanylpropylcarbamoyloxy)hexylester;
(E)-3-Methoxy-4-(4-Methoxybenzoyloxy)zimtsäure 6-(3-triethoxysilanylpropylcarbamoyloxy)hexylester;
(E)-4-(3,4-Dimethoxybenzoyloxy)zimtsäure 6-(3-triethoxysilanylpropylcarbamoyloxy)hexylester;
(E)-3-Methoxy-4-(3,4-Dimethoxybenzoyloxy)zimtsäure 6-(3-triethoxysilanylpropylcarbamoyloxy)hexylester;
(E)-3-Ethoxy-4-(3,4-Dimethoxybenzoyloxy)zimtsäure 6-(3-triethoxysilanylpropylcarbamoyloxy)hexylester;
(E)-4-(4-Methoxyphenyl)zimtsäure 6-(3-triethoxysilanylpropylcarbamoyloxy)hexylester;
(E)-4-(3,4-Dimethoxyphenyl)zimtsäure 6-(3-triethoxysilanylpropylcarbamoyloxy)hexylester;
(E)-4-(4-Ethylphenyl)zimtsäure 6-(3-triethoxysilanylpropylcarbamoylozy)hexylester;
(E)-4-(4-Ethylphenyl)zimtsäure 6-(3-triethoxysilanylpropylcarbamoyloxy)hexylester;
(E)-4-(trans-4-pentylcyclohexyl)zimtsäure 6-(3-triethoxysilanylpropylcarbamoyloxy)hexylester;
(E)-4-(cis-4-pentylcyclohexyl)zimtsäure 6-(3-triethoxysilanylpropylcarbamoyloxy)hexylester;
(E)-4-[(trans-4-pentylcyclohexyl)methoxy]zimtsäure 6-(3-triethoxysilanylpropylcarbamoyloxy)hexylester;
(E)-4-[(cis-4-pentylcyclohexyl)methoxy]zimtsäure 6-(3-triethoxysilanylpropylcarbamoyloxy)hexylester;
(E)-4-[4-(trans-4-pentylcyclohexyl)phenyl]zimtsäure 6-(3-triethoxysilanylpropylcarbamoyloxy)hexylester;
(E)-4-[4-(cis-4-pentylcyclohexyl)phenyl]zimtsäure 6-(3-triethoxysilanylpropylcarbamoyloxy)hexylester;

### Beispiel 2

### (E)-3,4-Dimethoxyzimtsäure (6-triethoxysilanylhexyl)ester

Ein Gemisch von 0.50 g 3,4-Dimethoxyzimtsäurehex-5-enylester, 1.0 ml Toluol, 2.9 ml Triethoxysilan und 0.02 ml einer Lösung von 134 mg Hexachloro(IV)platinsäure hexahydrat in 10 ml Isopropanol wird über Nacht bei 40°C reagieren gelassen. Dann wird das Reaktionsgemisch auf Raumtemperatur abgekühlt, über ein Kieselgelpolster filtriert und das Filtrat vollständig eingedampft. Chromatographie des Rückstandes über Kieselgel ergibt 3,4-Dimethoxyzimtsäure 6-triethoxysilanylhexylester.

Der als Ausgansmaterial verwendete 3,4-Dimethoxyzimtsäure hex-5-enylester wird wie folgt hergestellt:

### 3,4-Dimethoxyzimtsäure hex-5-enylester

Zu einem Gemisch von 1.0 g 3,4-Dimethoxyzimtsäure und 10 ml Dimethylformamid wird eine Lösung bestehend aus 0.72 ml 1,8-Diazabicyclo [5.4.0] undec-7-ene (1,5-5) in 5 ml Dimethylformamid innert 10 Min. bei Raumtemperatur getropft. Das Reaktionsgemisch wird auf 80°C erhitzt, anschliessend eine Lösung von 0.71 ml 6-Bromhexen in 5 ml Dimethylformamid innert 50 Min. zugetropft und während 1 Std. bei 80°C nachreagieren gelassen. Das Reaktionsgemisch wird danach auf Raumtemperatur abgekühlt, zwischen Diethylether und 1N Salzsäure verteilt und die organische Phase mehrmals mit einer gesättigten Natriumchloridlösung gewaschen. Dann wird die organische Phase über Magnesiumsulfat getrocknet, filtriert, und das Filtrat eingedampft. Chromatographie des Rückstandes an Kieselgel ergibt 3,4-Dimethoxyzimtsäure hex-6-enylester.

Auf analoge Weise können die folgenden Silan Derivate hergestellt werden:
(E)-2-Methoxyzimtsäure 6-triethoxysilanylhexylester;
(E)-3-Methoxyzimtsäure 8-triethoxysilanyloctylester,
(E)-3-Octyloxyzimtsäure 6-triethoxysilanylhexylester;
(E)-4-Methoxyzimtsäure 8-triethoxysilanyloctylester;
(E)-4-Ethoxyzimtsäure 8-triethoxysilanyloctylester;
(E)-4-Propyloxyzimtsäure 8-triethoxysilanyloctylester;
(E)-4-Butyloxyzimtsäure 6-triethoxysilanylhexylester;
(E)-4-Pentyloxyzimtsäure 8-triethoxysilanyloctylester;
(E)-4-Hexyloxyzimtsäure 8-triethoxysilanyloctylester;
(E)-4-Dodecyloxyzimtsäure 6-triethoxysilanylhezylester;
(E)-3-Fluorzimtsäure 6-triethoxysilanylhexylester;
(E)-4-Fluorzimtsäure 6-triethoxysilanylhexylester;
(E)-3-Chlorzimtsäure 6-triethoxysilanylhexylester;
(E)-4-Chlorzimtsäure 6-triethoxysilanylhexylester;
(E)-4-Trifluormethoxyzimtsäure 8-triethoxysilanyloctylester;
(E)-4-Acetamidozimtsäure 6-triethoxysilanylhexylester;
(E)-4-Acetamidozimtsäure 8-triethoxysilanyloctylester;
(E)-4-Pentanoylaminozimtsäure 6-triethoxysilanylhexylester;
(E)-4-Decanoylaminozimtsäure 6-triethoxysilanylhexylester;
(E)-3,4-Dimethoxyzimtsäure 5-triethoxysilanylpentylester;
(E)-3,4-Dimethoxyzimtsäure 7-triethozysilanylheptylester;
(E)-3,4-Dimethoxyzimtsäure 8-triethoxysilanyloctylester;
(E)-3,4-Dimethoxyzimtsäure 9-triethoxysilanylnonylester;
(E)-3,4-Dimethoxyzimtsäure 10-triethoxysilanyldecylester;
(E)-3,4-Dimethoxyzimtsäure 11-triethozysilanylundecylester;
(E)-3,4-Dimethoxyzimtsäure 12-triethoxysilanyldodecylester;
(E)-3,5-Dimethoxyzimtsäure 6-triethoxysilanylhexylester;
(E)-2,5-Dimethoxyzimtsäure 6-triethoxysilanylhexylester;
(E)-3-Methoxy-4-propyloxyzimtsäure 8-triethoxysilanyloctylester;
(E)-3-Methoxy-4-octyloxyzimtsäure 6-triethoxysilanylhexylester;
(E)-3-Decyloxy-4-methoxyzimtsäure 6-triethoxysilanylhexylester;
(E)-3-Fluor-4-methoxyzimtsäure 6-triethoxysilanylhexylester;
(E)-3-Chlor-4-methoxyzimtsäure 8-triethoxysilanyloctylester;
(E)-3-Propyl-4-methoxyzimtsäure 8-triethoxysilanyloctylester;
(E)-3,4,5-Trimethoxyzimtsäure 6-triethoxysilanylhexylester;
(E)-3,4-Difluorzimtsäure 8-triethoxysilanyloctylester;
(E)-2,3-Difluorzimtsäure 8-triethoxysilanyloctylester;
(E)-3,4,5-Trifluorzimtsäure 8-triethoxysilanyloctylester;
(E)-3-Fluor-4-chlorzimtsäure 6-triethoxysilanylhexylester;
(E)-3-Ethoxy-4-acetamidozimtsäure 6-triethoxysilanylhexylester;
(E)-4-(4-Methoxybenzoyloxy)zimtsäure 6-triethoxysilanylhexylester;
(E)-3-Methoxy-4-(4-Methoxybenzoyloxy)zimtsäure 6-triethoxysilanylhexylester;
(E)-4-(3,4-Dimethoxybenzoyloxy)zimtsäure 6-triethoxysilanylhexylester;
(E)-3-Methoxy-4-(3,4-Dimethoxybenzoyloxy)zimtsäure 6-triethoxysilanylhexylester;
(E)-3-Ethoxy-4-(3,4-Dimethoxybenzoyloxy)zimtsäure 6-triethoxysilanylhexylester.

### Beispiel 3:

### (E)-4-[(trans-4-heptylcyclohexyl)methoxy]zimtsäure 6-triethoxysilanylhexylester

Die Verbindung wird analog zu Beispiel 2 durch Veresterung von (E)-4-[(trans-4-heptylcyclohexyl)methoxy]zimtsäure mit 6-Bromhexen und nachfolgenden Umsatz des so entstandenen (E)-4-[(trans-4-heptylcyclohexyl)methoxy)zimtsäure hex-5-enylesters mit Triethoxysilan hergestellt.

Die als Ausgangsmaterial verwendete (E)-4-[(trans-4-heptylcyclohexyl)methoxylzimtsäure wird nach folgendem Verfahren hergestellt:

### 4-[(trans-4-heptylcyclohexyl)methoxy]benzaldehyd

Zu einer Suspension von 10,4 g 4-[(trans-4-heptylcyclohexyl)methoxy]benzonitril, hergestellt gemäss Mol Cryst. Liq. Cryst. 53, 147 (1979) in 150 ml Toluol werden innerhalb von 10 Minuten bei 0 °C 38,5 ml einer Diisobutylaluminiumhydrid Lösung (20% in Toluol) getropft. Dann wird das Reaktionsgemisch langsam auf Raumtemperatur erwärmt und noch 3,5 Stunden reagieren gelassen. Anschliessend wirde langsam In Salzsäure zugetropft, 1 Stunde gerührt und hierauf das Reaktionsgemisch zwischen Wasser und Methylenchlorid verteilt. Danach wird die organische Phase mehrmals mit Wasser gewaschen, über Magnesiumsulfat getrocknet, filtriert und eingedampft. Kristallisation aus Essigester / Methylenchlorid ergibt 4-[(trans-4-heptylcyclohexyl)methoxy]benzaldehyd.

### 4-[(trans-4-heptylcyclohexyl)methoxy]zimtsäure methylester

Zu einer Lösung von 6,4 ml Phosphonoessigsäuretrimethylester in 50 ml trockenem Tetrahydrofuran werden bei 0 °C innerhalb von 10 Minuten 27,6 ml einer 1,6 n Butyllithiumlösung getropft. Es wird 1,5 Stunden bei 0 °C gerührt und danach innerhalb von 5 Minuten bei derselben Temperatur eine Lösung von 10,3 g rohem 4-[(trans-4-heptylcyclohexyl)methoxy]benzaldehydin 50 ml trockenem Tetrahydrofuran zugetropft. Anschliessend wird langsam auf Raumtemperatur erwärmt und während 15 Stunden reagieren gelassen. Das Reaktionsgemisch wird dann zwischen Methylenchlorid und 1n Salzsäure verteilt, die organische Phase mit gesättigter Natriumbicarbonatlösung und Wasser gewaschen, über Magnesiumsulfat getrocknet und eingedampft. Chromatographie an Kieselgel mit Essigester / Hexan (1:9) und anschliessende mehrfache Umkristallisation aus Hexan / Essigester ergibt 4-[(trans-4-heptylcyclohexyl)methoxy]zimtsäure methylester.

### 4-[(trans-4-heptylcyclohexyl)methoxy]zimtsäure

Ein Gemisch von 8 g 4-[(trans-4-heptylcyclohexyl)methoxy]zimtsäure methylester und 50 ml 10 prozentige methanolische Kaliumhydroxyd-Lösung wird während 16 Std. bei Raumtemperatur stehen gelassen. Dann wird unter stetigem Rühren und unter Kühlung mit 1 n wässriger Schwefelsäure angesäuert, mit Methylenchlorid extrahiert, die organische Phase mehrmals mit Wasser gewaschen, über Magnesiumsulfat getrocknet und eingedampft. Kristallisation aus Hexan/Essigester ergibt 4-[(trans-4-heptylcyclohexyl)methoxy]zimtsäure.

Auf analoge Weise können die folgenden Silan Derivate hergestellt werden:
(E)-4-(4-Methoxyphenyl)zimtsäure 6-triethoxysilanylhexylester;
(E)-4-(4-Trifluormethoxyphenyl)zimtsäure 6-triethoxysilanylhexylester;
(E)-4-(4-Decyloxyphenyl)zimtsäure 6-triethoxysilanylhexylester;
(E)-4-[4-(3,3,4,4,5,5,6,6,6-Nonafluorhexyloxy)phenyl]zimtsäure 6-triethoxysilanylhexylester;
(E)-4-(3,4-Dimethoxyphenyl)zimtsäure 6-triethoxysilanylhexylester;
(E)- 4-(3 -Methoxy-4-octyloxyphenyl)zimtsäure 6-triethoxysilanylhexylester;
(E)-4-(3-Octyloxy-4-methoxyphenyl)zimtsäure 6-triethoxysilanylhexylester;
(E)-4-(4-Ethylphenyl)zimtsäure 6-triethoxysilanylhexylester;
(E)-4-(4-Hexylphenyl)zimtsäure 6-triethoxysilanylhexylester;
(E)-4-(trans-4-pentylcyclohexyl)zimtsäure 6-triethoxysilanylhexylester;
(E)-4-(cis-4-pentylcyclohexyl)zimtsäure 6-triethoxysilanylhexylester;
(E)-4-[(trans-4-heptylcyclohexyl)methoxy]zimtsäure 6-triethoxysilanylhexylester;
(E)-4-[(cis-4-hexylcyclohexyl)methoxy]zimtsäure 6-triethoxysilanylhexylester;
(E)-4-[4-(trans-4-pentylcyclohexyl)phenyl]zimtsäure 6-triethoxysilanylhexylester;
(E)-(E)-4-[4-(cis-4-pentylcyclohexyl)phenyl]zimtsäure 6-triethoxysilanylhexylester;
(E)-(E)-4-{4-[(trans-4-octylcyclohexyl)methoxy]phenyl}zimtsäure 6-triethoxysilanylhexylester;
(E)-4-{4-[(cis-4-heptylcyclohexyl)methoxy]phenyl}zimtsäure 6-triethoxysilanylhexylester;
(E)-4-{trans-4-[(trans-4-pentylcyclohexyl)cyclohexyl]methoxy}zimtsäure 6-triethoxysilanylhexylester;
(E)-4-{cis-4-[(trans-4-pentylcyclohexyl)cyclohexyl]methoxy}zimtsäure 6-triethoxysilanylhexylester;
(E)-4-{trans-4-[(cis-4-pentylcyclohexyl)cyclohexyl]methoxy}zimtsäure 6-triethoxysilanylhexylester;

### Beispiel 4:

### (E)-3-(6-Heptyloxynaphthalin-2-yl)acrylsäure 6-(3-triethoxysilanylpropylcarbamoyloxy)hexylester

Die Verbindung wird analog zu Beispiel 1 durch Veresterung von (E)-3-(6-heptyloxynaphthalin-2-yl)acrylsäure mit 6-Chlorhexanol und nachfolgenden Umsatz des so entstandenen (E)-3-(6-heptyloxynaphthalin-2-yl)acrylsäure 6-hydroxyhexylesters mit 3-Triethoxysilanylpropylisocyanat hergestellt.

Die als Ausgangsmaterial verwendete (E)-3-(6-heptyloxynaphthalin-2-yl)acrylsäure wird nach folgendem Verfahren hergestellt:

### 6-Brom-2-heptyloxynaphthalin

Ein Gemisch von 5 g 6-Brom-2-naphthol, 50 ml Dimethylsulfoxyd, 3,9 ml 6-Bromheptan, 7,1 g Kaliumjodid und 7,1 g gemahlenes und bei 80°C im Hochvakuum aktiviertes Kaliumcarbonat wird während 16 Std auf 65 °C erhitzt. Dann wird abgekühlt, zwischen Essigester und Wasser verteilt, die organische Phase mehrmals mit Wasser gewaschen, über Magnesiumsulfat getrocknet, filtriert und eingedampft. Chromatographie des Rückstandes an 200 g Kieselgel mit Toluol und anschliessende Kristallisation aus Toluol/Hexan (8:1) ergibt 6-Brom-2-heptyloxynaphthalin.

### (E)-3-(6-Heptyloxynaphthalin-2-yl)acrylsäure methylester

Ein Gemisch von 5,2 g 6-Brom-2-heptyloxynaphthalin, 25 ml Triethylamin, 4,3 ml Acrylsäure methylester, 0,072 g Palladiumacetat und 0,392 g Tri-o-tolylphosphin wird während 16 Std. unter Rückfluss erhitzt. Danach wird das Reaktionsgemisch abgekühlt, zwischen Essigester und Wasser verteilt, die organische Phase mit Wasser gewaschen, über Magnesiumsulfat getrocknet, filtriert und eingedampft. Der Rückstand wird an 250 g Kieselgel mit Toluol/Essigester (3:1) chromatographiert und anschliessend aus Toluol kristallisiert. Dies ergibt (E)-3-(heptyloxynaphthalin-2-yl)acrylsäure methylester.

### (E)-3-(6-Heptyloxynaphthalin-2-yl)acrylsäure methylester

Ein Gemisch von 0,8 g (E)-3-(heptyloxynaphthalin-2-yl)acrylsäure methylester und 10 ml 10 prozentige methanolische Kaliumhydroxyd-Lösung wird während 16 Std. bei Raumtemperatur stehen gelassen. Dann wird unter stetigem Rühren und unter Kühlung mit 1 n wässriger Schwefelsäure angesäuert, mit Methylenchlorid extrahiert, die organische Phase mehrmals mit Wasser gewaschen, über Magnesiumsulfat getrocknet und eingedampft. Kristallisation aus Hexan/Essigester ergibt (E)-3-(6-Heptyloxynaphthalin-2-yl)acrylsäure.

In analoger Weise lassen sich folgende Silane synthetisieren:
(E)-3-(6-Ethoxynaphthalin-2-yl)acrylsäure 6-(3-triethoxysilanylpropylcarbamoyloxy)hexylester;
(E)-3-(6-Propyloxynaphthalin-2-yl)acrylsäure 6-(3-triethoxysilanylpropylcarbamoyloxy)hexylester;
(E)-3-(6-Butyloxynaphthalin-2-yl)acrylsäure 6-(3-triethoxysilanylpropylcarbamoyloxy)hexylester;
(E)-3-(6-Pentyloxynaphthalin-2-yl)acrylsäure 6-(3-triethoxysilanylpropylcarbamoyloxy)hexylester;
(E)-3-(6-Hexyloxynaphthalin-2-yl)acrylsäure 6-(3-triethoxysilanylpropylcarbamoyloxy)hexylester;
(E)-3-(6-Octyloxynaphthalin-2-yl)acrylsäure 6-(3-triethoxysilanylpropylcarbamoylosy)hexylester;
(E)-3-(6-Dodecyloxynaphthalin-2-yl)acrylsäure 6-(3-triethoxysilanylpropylcarbamoyloxy)hexylester;
(E)-3-(6-Heptyloxynaphthalin-2-yl)acrylsäure 4-(3-triethoxysilanylpropylcarbamoyloxy)butylester;
(E)-3-(6-Heptyloxynaphthalin-2-yl)acrylsäure 5-(3-triethoxysilanylpropylcarbamoyloxy)pentylester;
(E)-3-(6-Heptyloxynaphthalin-2-yl)acrylsäure 8-(3-triethoxysilanylpropylcarbamoyloxy)octylester;
(E)-3-(6-Heptyloxynaphthalin-2-yl)acrylsäure 6-(2-triethoxysilanylethylcarbamoyloxy)hexylester;
(E)-3-{6-[(trans-4-propylcylohexyl)methoxy]naphthalin-2-yl}acrylsäare 6-(2-triethoxysilanylethylcarbamoyloxy)hexylester;
(E)-3-{6-[(cis-4-propylcylohexyl)methoxy]naphthalin-2-yl}acrylsäure 6-(2-triethoxysilanylethylcarbamoyloxy)hexylester;
(E)-3-{6-[(trans-4-decylcylohexyl)methoxy]naphthalin-2-yl}acrylsäure 6-(2-triethoxysilanylethylcarbamoyloxy)hexylester;
(E)-3-{6-[(cis-4-decylcylohexyl)methoxy]naphthalin-2-yl}acrylsäure 6-(2-triethoxysilanylethylcarbamoyloxy)hexylester.

### Beispiel 5:

### (E)-3,4-Dimethoxyzimtsäure (6-trichlorsilanylhexyl)ester

Zu einer Lösung von 0,1 g H₂PtCl₆ in 20 ml trockenem Tetrahydrofuran werden unter Rühren 5 ml Trichlorsilan zugegeben. Dazu wird vorsichtig eine Lösung von 14,8 g (E)-3,4-Dimethoxyzimtsäure hex-5-enylester, gelöst in 20 ml trockenem Tetrahydrofuran getropft. Danach wird während 5 Std. bei Raumtemperatur und dann während 16 Std. bei 50 °C gerührt. Das Reaktionsgemisch wird im Wasserstrahlvakuum eingeengt und an der Oelpumpe mit Kühlfalle unter reduziertem Druck vom restlichen Lösungsmittel und Trichlorsilan vollständig befreit. Dies ergibt rohen (E)-3,4-Dimethoxyzimtsäure (6-trichlorsilanylhexyl)ester, der zur Aufbewahrung in trockenem Tetrahydrofuran gelöst wird.

Die Herstellung des als Ausgangsmaterial erforderlichen (E)-3,4-Dimethoxyzimtsäure hex-5-enylesters ist in Beispiel 2 beschrieben.

Auf analoge Weise können die folgenden Silan Derivate hergestellt werden:
(E)-2-Methoxyzimtsäure 6-trichlorsilanylhexylester;
(E)-3-Methoxyzimtsäure 8-trichlorsilanyloctylester;
(E)-3-Hexyloxyxyzimtsäure 6-trichlorsilanylhexylester;
(E)-4-Methoxyzimtsäure 6-trichlorsilanylhexylester;
(E)-4-Ethoxyzimtsäure 6-trichlorsilanylhexylester;
(E)-4(E)-4-Propyloxyzimtsäure 6-trichlorsilanylhexylester;
(E)-4-Butyloxyzimtsäure 8-trichlorsilanyloctylester;
(E)-4-Pentyloxyzimtsäure 6-trichlorsilanylhexylester;
(E)-4-Hexyloxyzimtsäure 6-trichlorsilanylhexylester;
(E)-4-Dodecyloxyzimtsäure 8-trichlorsilanyloctylester;
(E)-3-Fluorzimtsäure 8-trichlorsilanyloctylester;
(E)-4-Fluorzimtsäure 8-trichlorsilanyloctylester;
(E)-3-Chlorzimtsäure 8-trichlorsilanyloctylester;
(E)-4-Chlorzimtsäure 8-trichlorsilanyloctylester;
(E)-4-Trifluormethoxyzimtsäure 6-trichlorsilanylhexylester;
(E)-4-Acetamidozimtsäure 6-trichlorsilänylhexylester;
(E)-4-Acetamidozimtsäure 8-trichlorsilanyloctylester;
(E)-4-Pentanoylaminozimtsäure 6-trichlorsilanylhezylester;
(E)-4-Decanoylaminozimtsäure 6-trichlorsilanylhexylester;
(E)-3,4-Dimethoxyzimtsäure 5-trichlorsilanylpentylester,
(E)-3,4-Dimethoxyzimtsäure 7-trichlorsilanylheptylester;
(E)-3,4-Dimethoxyzimtsäure 8-trichlorsilanyloctylester;
(E)-3,4-Dimethoxyzimtsäure 9-trichlorsilanylnonylester;
(E)-3,4-Dimethoxyzimtsäure 10-trichlorsilanyldecylester;
(E)-3,4-Dimethoxyzimtsäure 11-trichlorsilanylundecylester;
(E)-3,4-Dimethoxyzimtsäure 12-trichlorsilanyldodecylester;
(E)-3,5-Dimethoxyzimtsäure 6-trichlorsilanylhexylester;
(E)-2,5-Dimethoxyzimtsäure 6-trichlorsilanylhexylester;
(E)-3-Methoxy-4-propyloxyzimtsäure 6-trichlorsilanylhexylester;
(E)-3-Methoxy-4-octyloxyzimtsäure 6-trichlorsilanylhexylester;
(E)-3-Decyloxy-4-methoxyzimtsäure 6-trichlorsilanylhexylester;
(E)-3-Fluor-4-methoxyzimtsäure 7-trichlorsilanylheptylester;
(E)-3-Chlor-4-methoxyzimtsäure 8-trichlorsilanyloctylester;
(E)-3-Propyl-4-methoxyzimtsäure 6-trichlorsilanylhexylester;
(E)-3,4,5-Trimethoxyzimtsäure 8-trichlorsilanyloctylester;
(E)-3,4-Difluorzimtsäure 9-trichlorsilanylnonylester;
(E)-2,3-Difluorzimtsäure 10-trichlorsilanyldecylester;
(E)-3,4,5-Trifluorzimtsäure 6-trichlorsilanylhexylester;
(E)-3-Fluor-4-chlorzimtsäure 8-trichlorsilanylocytlester;
(E)-3-Ethoxy-4-acetamidozimtsäure 6-trichlorsilanylhexylester;
(E)-4-(4-Methoxybenzoyloxy)zimtsäure 6-trichlorsilanylhexylester;
(E)-3-Methoxy-4-(4-Methoxybenzoyloxy)zimtsäure 6-trichlorsilanylhexylester;
(E)-4-(3,4-Dimethoxybenzoyloxy)zimtsäure 6-trichlorsilanylhexylester;
(E)-3-Methoxy-4-(3,4-Dimethoxybenzoyloxy)zimtsäure 6-trichlorsilanylhexylester;
(E)-3-Ethoxy-4-(3,4-Dimethoxybenzoyloxy)zimtsäure 8-trichlorsilanyloctylester;
(E)-4-(4-Methoxyphenyl)zimtsäure 8-trichlorsilanyloctylester;
(E)-4-(4-Trifluormethoxyphenyl)zimtsäure 8-trichlorsilanyloctylester;
(E)-4-(4-Decyloxyphenyl)zimtsäure 6-trichlorsilanylhexylester;
(E)-4-[4-(6,6,6-Trifluorhexyloxy)phenyl]zimtsäure 6-trichlorsilanylhexylester;
(E)-4-4-(3,4-Dimethoxyphenyl)zimtsäure 8-trichlorsilanyloctylester;
(E)-4-(3 -Methoxy-4-hexyloxyphenyl)zimtsäure 6-trichlorsilanylhexylester;
(E)-4-(3-Hexyloxy-4-methoxyphenyl)zimtsäure 6-trichlorsilanylhexylester;
(E)-4-(4-Propylphenyl)zimtsäure 6-trichlorsilanylhexylester;
(E)-4-(4-Decylphenyl)zimtsäure 6-trichlorsilanylhexylester;
(E)-4-(trans-4-hexylcyclohexyl)zimtsäure 6-trichlorsilanylhexylester;
(E)-4-(cis-4-heptylcyclohexyl)zimtsäure 6-trichlorsilanylhexylester;
(E)-4-[(trans-4-hexylcyclohexyl)methoxy]zimtsäure 6-trichlorsilanylhexylester;
(E)-4-[(cis-4-heptylcyclohexyl)methoxy]zimtsäure 6-trichlorsilanylhexylester;
(E)-4-[4-(trans-4-pentylcyclohexyl)phenyl]zimtsäure 6-trichlorsilanylhexylester;
(E)-4-[4-(cis-4-pentylcyclohexyl)phenyl]zimtsäure 6-trichlorsilanylhexylester;
(E)-4-{4-[(trans-4-hexylcyclohexyl)methoxy]phenyl}zimtsäure 6-trichlorsilanylhexylester;
(E)-4-{4-[(cis-4-heptylcyclohexyl)methoxy]phenyl}zimtsäure 6-trichlorsilanylhexylester;
(E)-4-{trans-4-[(trans-4-pentylcyclohexyl)cyclohexyl]methoxy}zimtsäure 6-trichlorsilanylhexylester;
(E)-4-{cis-4-[(trans-4-hexylcyclohexyl)cyclohexyl]methoxy}zimtsäure 6-trichlorsilanylhexylester;
(E)-4-{trans-4-[(cis-4-heptylcyclohexyl)cyclohezyl]methoxy}zimtsäure 6-trichlorsilanylhexylester.

### Beispiel 6:

### Herstellung einer photovernetzbaren Schicht

0,02 g (E)-3,4-Dimethoxyzimtsäure 6-(3-triethoxysilanylpropylcarbamoyloxy)hexylester wurden in 2 ml Propanol gelöst. Diese Lösung wurde auf eine gereinigte Glasplatte (19 x 26 mm) mit 1000 Upm aufgeschleudert und danach während 30 Min. bei einer Temperatur von 130 °C getempert. Hierauf wurde die so behandelte Glasplatte während 15 Min im Ultraschallbad in Ethanol gereinigt.

### Beispiel 7:

### Herstellung einer Orientierungsschicht für Flüssigkristalle

Die in Beispiel 6 beschriebene beschichtete Glasplatte wurde während einer Minute mit dem linear polarisierten UV-Licht einer Quecksilber-Hochdrucklampe bestrahlt. Danach wurde auf die belichtete Schicht eine Flüssigkristallschicht durch spin-coating aufgebracht. Im Polarisationsmikroskop konnte hierauf eine uniaxial doppelbrechende Schicht orientierter Flüssigkristallmoleküle beobachtet werden. Mit Hilfe eines Kippkompensators wurde festgestellt, dass die Orientierungsrichtung mit der beim Belichten der Silanschicht eingestellten Polarisationsrichtung des UV-Lichtes übereinstimmt.

### Beispiel 8:

### Herstellung einer Orientierungsschicht mit definiertem Kippwinkel

Zwei gemäss Beispiel 6 mit (E)-3,4-Dimethoxyzimtsäure 6-(3-triethoxysilanylpropylcarbamoyloxy)hexylester beschichtete Glasplatten wurden mit linear polarisiertem UV-Licht während 3 Min. bestrahlt, wobei die Einfallsrichtung des Lichtes gegenüber der Plattennormalen um 70° geneigt war. Die Polarisationsrichtung des Lichtes lag dabei in der durch die Lichteinfallsrichtung und der Plattennormalen aufgespannten Ebene. Die beiden Platten wurden danach mit der belichteten Seite nach innen zu einer Flüssigkristallzelle mit einem Plattenabstand von 20 mm so zusammengebaut, dass die beim Belichten der Platten durch Polarisation und Lichteinfall ausgezeichneten Richtungen einander parallel waren. Dann wurde die Zelle mit der Flüssigkristallmischung 3010 von ROLIC AG bei einer Temperatur von 100 °C gefüllt, wobei sich die Flüssigkristallmischung während des Füllvorgangs in der isotropen Phase befand. Hierauf wurde die Zelle allmählich mit einer Rate von 1 °C/Min. auf Raumtemperatur abgekühlt. Zwischen gekreuzten Polarisatoren erkannte man nun eine einheitlich orientierte Flüssigkristallschicht. Der mit Hilfe der Kristalldrehmethode gemessene Kippwinkel dieser Parallelzelle betrug 0,2°

## Patentansprüche

1. Silane der allgemeinen Formel I, 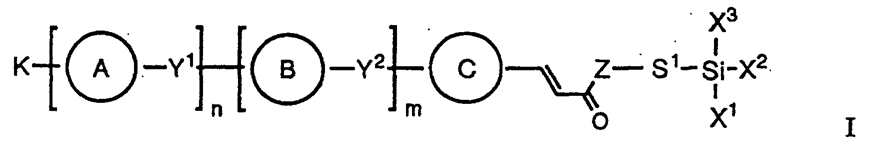 worin
X¹, X², X³ Alkyl, Alkoxy oder Halogen bedeuten, jedoch mindestens einer dieser Reste entweder Alkoxy oder Halogen ist;
S¹ eine Spacereinheit, wie eine gegebenenfalls einfach oder mehrfach mit Fluor-, Chlor- oder Cyano-substituierte geradkettige oder verzweigte Alkylengruppierung -(CH₂)ᵣ-, oder eine Kette der Formel -(CH₂)ᵣ-L-(CH₂)ₛ-, wobei L eine Einfachbindung oder verknüpfende funktionelle Gruppen wie O, COO, OOC, NR¹, NR¹-CO-, CO-NR¹, NR¹-COO, OCO-NR¹, NR¹-CO-NR¹, -CH=CH-, -C≡C-, R¹ Wasserstoff oder niederes Alkyl bedeuten und r und s jeweils eine ganze Zahl von 1 bis 20 darstellt mit der Massgabe, dass r + s ≤ 25 ist;
Ring A unsubstituiertes oder mit Fluor, Chlor, Cyano, Alkyl oder Alkoxy substituiertes Phenylen, Pyridin-2,5-diyl, Pyrimidin-2,5-diyl, 1,3-Dioxan-2,5-diyl, Cyclohexan-1,4-diyl, Piperidin-1,4-diyl oder Piperazin-1,4-diyl, wobei der Alkyl und/oder der Alkoxy-Substituent durch Fluor ein-oder mehrfach substituiert sein kann;
Ring B unsubstituiertes oder mit Fluor, Chlor, Cyano, Alkyl oder Alkoxy substituiertes Phenylen, Pyridin-2,5-diyl, Pyrimidin-2,5-diyl, 1,4- bzw. 2,6-Naphthylen, 1,3-Dioxan-2,5-diyl oder Cyclohexan-1,4-diyl, wobei der Alkyl und/oder der Alkoxy-Substituent durch Fluor ein-oder mehrfach substituiert sein kann;
K Wasserstoff, Fluor, Chlor, Cyano, Nitro oder eine gegebenenfalls mit Fluor, Chlor, Cyano oder Nitro substituierte geradkettige oder verzweigte Alkyl-, Alkoxy-Alkyl-COO-, Alkyl-CO-NR² oder Alkyl-OCO-Gruppe mit 1 bis 20 Kohlenstoffatomen in der gegebenenfalls eine CH₂ Gruppe oder mehrere nicht benachbarte CH₂ Gruppen durch O, CH=CH oder C≡C ersetzt sein können und worin R² Wasserstoff oder niederes Alkyl;
Y¹, Y² unabhängig voneinander eine einfache Kovalenzbindung, -(CH₂)ₜ-, -O-, -CO-, -CO-O-, -O-OC-, -NR³-, -CO-NR³-, -R³N-CO-, -(CH₂)ᵤ-O-, -O-(CH₂)ᵤ-, -(CH₂)ᵤ-NR³- oder -NR³-(CH₂)ᵤ-, worin R³ Wasserstoff oder niederes Alkyl;
t eine ganze Zahl von 1 bis 4;
u eine ganze Zahl von 1 bis 3;
m, n unabhängig voneinander 0 oder 1;
Ring C unsubstituiertes oder mit Fluor, Chlor, Cyano, Alkyl oder Alkoxy substituiertes Phenylen, Pyrimidin-2,5- oder 3,5-diyl, Pyridin-2,5- oder -2,4-diyl oder -2,6-diyl, 2,5-Thiophenylen, 2,5-Furanylen, 1,4- oder 2,6-Naphthylen, wobei der Alkyl und/oder der Alkoxy-Substituent durch Fluor ein-oder mehrfach substituiert sein kann;
Z -O- oder -NR⁴-, und R⁴ Wasserstoff oder niederes Alkyl;
bedeuten, enter dem Vorbehalt, dass
K nicht Wasserstoff oder Halogen ist, falls gleichzeitig m sowie n die Zahl 0 bedeuten und der Ring C unsubstituiertes Phenylen bedeutet.

2. Silane der allgemeinen Formel I nach Anspruch 1, worin X¹, X², X³, S¹, K, m und n die in Anspruch 1 angegebene Bedeutung haben und
Ring A unsubstituiertes oder mit Fluor, Chlor, Cyano, Alkyl oder Alkoxy substituiertes Phenylen, Pyridin-2,5-diyl, Pyrimidin-2,5-diyl oder Cyclohexan-1,4-diyl, wobei der Alkyl und/oder der Alkoxy-Substituent durch Fluor ein-oder mehrfach substituiert sein kann;
Ring B unsubstituiertes oder mit Fluor, Chlor, Cyano, Alkyl oder Alkoxy substituiertes Phenylen, Pyridin-2,5-diyl, Pyrimidin-2,5-diyl, 1,4- bzw. 2,6-Naphthylen oder Cyclohexan-1,4-diyl, wobei der Alkyl und/oder der Alkoxy-Substituent durch Fluor ein-oder mehrfach substituiert sein kann;
Y¹, Y² unabhängig voneinander eine einfache Kovalenzbindung, -CH₂CH₂-, -O-, -CH₂-O-, -O-CH₂-, -CO-O- oder -O-OC-;
Ring C unsubstituiertes oder mit Fluor, Chlor, Cyano, Alkyl oder Alkoxy substituiertes 1,3- oder 1,4-Phenylen, Pyrimidin-2,5-diyl, Pyridin-2,5-diyl, 2,5-Furanylen oder 1,4- oder 2,6-Naphthylen, wobei der Alkyl und/oder der Alkoxy-Substituent durch Fluor ein-oder mehrfach substituiert sein kann;
Z -O-;
bedeuten.

3. Silane der allgemeinen Formel I nach Anspruch 1 oder 2, worin
X¹, X², X³, S¹, K und m die in Anspruch 1 angegebene Bedeutung haben und
n 0;
Ring B unsubstituiertes oder mit Fluor, Chlor, Cyano, Alkyl oder Alkoxy substituiertes Phenylen, Pyridin-2,5-diyl, Pyrimidin-2,5-diyl oder Cyclohexan-1,4-diyl, wobei der Alkyl und/oder der Alkoxy-Substituent durch Fluor ein-oder mehrfach substituiert sein kann;
Y² eine einfache Kovalenzbindung, -CO-O- oder -CH₂-O-;
Ring C unsubstituiertes oder mit Fluor, Chlor, Cyano, Alkyl oder Alkoxy substituiertes 1,3- oder 1,4-Phenylen oder 1,4- oder 2,6-Naphthylen, wobei der Alkyl und/oder der Alkoxy-Substituent durch Fluor ein-oder mehrfach substituiert sein kann;
Z -O-;
bedeuten.

4. Silane nach Anspruch 3,
(E)-3,4-Dimethoxyzimtsäure 6-(3-triethoxysilanylpropylcarbamoyloxy)hexylester;
(E)-3,4-Dimethoxyzimtsäure (6-triethoxysilanylhexyl)ester;
(E)-3,4-Dimethoxyzimtsäure (6-trichlorsilanylhexyl)ester;
(E)-4-[(trans-4-heptylcyclohexyl)methoxy]zimtsäure 6-triethoxysilanylhexylester;
(E)-3-(6-Heptyloxynaphthalin-2-yl)acrylsäure 6-(3-triethoxysilanylpropylcarbamoyloxy)hexylester.

5. Vernetzbare Gemische bestehend aus mindestens 2 Komponenten, wovon mindestens eine Komponente eine photovernetzbares Silanderivat der in Anspruch 1 definierten Formel I ist.

6. Vernetzbare Gemische gemäss Anspruch 5, **dadurch gekennzeichnet, dass** sie neben einer oder mehreren photovernetzbaren Silanderivaten der in Anspruch 1 definierten Formel I, eine oder mehrere unvernetzbare Silanderivate der allgemeinen Formel II enthalten, 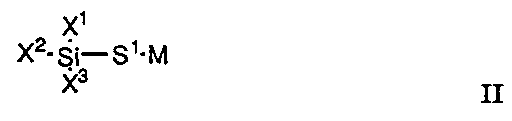 worin
X¹, X², X³, S¹ die in Anspruch 1 angegebene Bedeutung haben und M niederes Alkyl, durch Fluor ein-oder mehrfach substituiertes niederes Alkyl, niederes Alkoxy, durch Fluor ein-oder mehrfach substituiertes niederes Alkoxy oder einen mesogenen Rest der allgemeinen Formel III bedeutet, 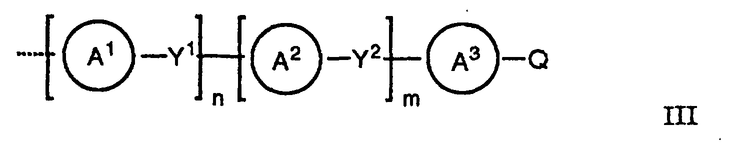 worin
Y¹, Y², m und n die in Anspruch 1 angegebene Bedeutung haben und
A¹, A², A³ unsubstituiertes oder mit Fluor, Chlor, Cyano, Alkyl oder Alkoxy substituiertes Phenylen, Pyridin-2,5-diyl, Pyrimidin-2,5-diyl, 2,6-Naphthylen, 1,3-Dioxan-2,5-diyl, Cyclohexan-1,4-diyl, wobei der Alkyl und/oder der Alkoxy-Substituent durch Fluor ein-oder mehrfach substituiert sein kann und wobei höchstens einer der Ringe von Phenylen oder Cyclohexylen verschieden ist;
Q niederes Alkyl oder Alkoxy, worin eines oder mehrere Wasserstoffatome durch Fluor ersetzt sein können, Fluor, Chlor, Cyano oder Nitro;
bedeuten.

7. Vernetzbare Gemische gemäss Anspruch 6, worin
n 0;
m 0 oder 1;
A² und A³ Phenylen oder Cyclohexylen;
Y¹, Y² eine einfache Kovalenzbindung, -CH₂CH₂-, -O-, -CH₂-O-, -O-CH₂-, -CO-O- oder -O-OC-;
Q gegebenenfalls mit fluor substituiertes niederes Alkyl oder Alkoxy, Fluor, Chlor oder Cyano;
bedeuten.

8. Vernetzbare Gemische gemäss Anspruch 7, worin
m 0;
A³ Phenylen oder Cyclohexylen;
Q gegebenenfalls mit Fluor substituiertes niederes Alkyl oder Alkoxy bedeuten.

9. Verwendung von photovernetzbaren Silanderivaten gemäss einem der Ansprüche 1 bis 4 zur Herstellung von Orientierungsschichten für Flüssigkristalle, sowie deren Verwendung in optischen Bauelementen, insbesondere zur Herstellung von Hybridschichtelementen.

10. Verwendung von vernetzbaren Gemischen gemäss einem der Ansprüche 5 -8 zur Herstellung von Orientierungsschichten für Flüssigkristalle, sowie deren Verwendung in optischen Bauelementen, insbesondere zur Herstellung von Hybridschichtelementen.

## Claims

1. A silane of the general formula I: 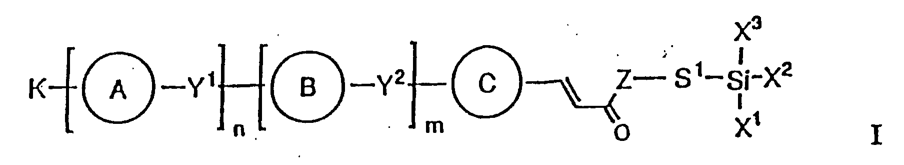 in which
X¹, X² and X³ denote alkyl, alkoxy or halogen, but at least one of these radicals is either alkoxy or halogen;
S¹ denotes a spacer unit, such as a straight-chain or branched alkylene group -(CH₂)ᵣ- which is optionally mono- or polysubstituted by fluorine, chlorine or cyano, or denotes a chain of the formula -(CH₂)ᵣ-L-(CH₂)ₛ-, in which L denotes a single bond or linking functional groups, such as O, COO, OOC, NR¹, NR¹-CO-, CO-NR¹, NR¹-COO, OCO-NR¹, NR¹-CO-NR¹, -CH=CH- or -C≡C-, R¹ denotes hydrogen or lower alkyl and r and s each represent an integer from 1 to 20, with the proviso that r + s is ≤ 25;
Ring A denotes unsubstituted or fluorine-, chlorine-, cyano-, alkyl- or alkoxy- substituted phenylene, pyridine-2,5-diyl, pyrimidine-2,5-diyl, 1,3-dioxane-2,5-diyl, cyclohexane-1,4-diyl, piperidine-1,4-diyl or piperazine-1,4-diyl, it being possible for the alkyl and/or the alkoxy substituent to be mono- or polysubstituted by fluorine;
Ring B denotes unsubstituted or fluorine-, chlorine-, cyano-, alkyl- or alkoxy- substituted phenylene, pyridine-2,5-diyl, pyrimidine-2,5-diyl, 1,4- or 2,6-naphthylene, 1,3-dioxane-2,5-diyl or cyclohexane-1,4-diyl, it being possible for the alkyl and/or the alkoxy substituent to be mono- or polysubstituted by fluorine;
K is hydrogen, fluorine, chlorine, cyano, nitro or a straight-chain or branched alkyl, alkoxy, allcyl-COO, alkyl-CO-NR² or alkyl-OCO group having 1 to 20 carbon atoms which is optionally substituted by fluorine, chlorine, cyano or nitro and in which optionally one CH₂ group or a plurality of non-neighboring CH₂ groups may be replaced by 0, CH=CH or C≡C and in which R² denotes hydrogen or lower alkyl;
Y¹ and Y², independently of one another, denote a single covalent bond, -(CH₂)ₜ-, -O-, -CO-,-CO-O-, -O-OC-, -NR³-, -CO-NR³-, -R³N-CO-,-(CH₂)ᵤ-O-, -O-(CH₂)ᵤ-, -(CH₂)ᵤ-NR³- or NR³-(CH₂)ᵤ-, in which R³ denotes hydrogen or lower alkyl;
t denotes an integer from 1 to 4;
u denotes an integer from 1 to 3;
m and n, independently of one another, denote 0 or 1;
Ring C denotes unsubstituted or fluorine-, chlorine-, cyano-, alkyl- or alkoxy- substituted phenylene, pyrimidine-2,5- or 3,5-diyl, pyridine-2,5- or -2,4-diyl or -2,6-diyl, 2,5-thiophenylene, 2,5-furanylene, 1,4- or 2,6-naphthylene, it being possible for the alkyl and/or the alkoxy substituent to be mono- or polysubstituted by fluorine;
Z denotes -O- or -NR⁴- and R⁴ denotes hydrogen or lower alkyl, with the proviso that K is not hydrogen or halogen when simultaneously m is 0, n is 0, and Ring C is unsubstituted phenylene.

2. The silane of the general formula I as claimed in claim 1, wherein X¹, X², X³, S¹, K, m and n have the meaning stated in claim 1 and
Ring A denotes unsubstituted or fluorine-, chlorine-, cyano-, alkyl- or alkoxy-substituted phenylene, pyridine-2,5-diyl, pyrimidine-2,5-diyl or cyclohexane-1,4-diyl, it being possible for the alkyl and/or the alkoxy substituent to be mono- or polysubstituted by fluorine;
Ring B denotes unsubstituted or fluorine-, chlorine-, cyano-, alkyl- or alkoxy-substituted phenylene, pyridine-2,5-diyl, pyrimidine-2,5-diyl, 1,4- or 2,6-naphthylene or cyclohexane-1,4-diyl, it being possible for the alkyl and/or the alkoxy substituent to be mono- or polysubstituted by fluorine;
Y¹ and Y², independently of one another, denote a single covalent bond, -CH₂CH₂-, -O-, -CH₂-O-, -O-CH₂-, -CO-O- or -O-OC-;
Ring C denotes unsubstituted or fluorine-, chlorine-, cyano-, alkyl- or alkoxy-substituted 1,3- or 1,4-phenylene, pyrimidine-2,5-diyl, pyridine-2,5-diyl, 2,5-furanylene or 1,4- or 2,6-naphthylene, it being possible for the alkyl and/or the alkoxy substituent to be mono- or polysubstituted by fluorine;
Z denotes -O-.

3. The silane of the general formula I as claimed in claim 1 or 2, wherein X¹, X², X³, S¹, K and m have the meaning stated in claim 1 and
n denotes 0;
Ring B denotes unsubstituted or fluorine-, chlorine-, cyano-, alkyl- or alkoxy-substituted phenylene, pyridine-2, 5-diyl, pyrimidine-2, 5-diyl or cyclohexane-1,4-diyl, it being possible for the alkyl and/or the alkoxy substituent to be mono- or polysubstituted by fluorine;
Y² denotes a single covalent bond, -CO-O- or -CH₂-O-;
Ring C denotes unsubstituted or fluorine-, chlorine-, cyano-, alkyl or alkoxy- substituted 1,3- or 1,4-phenylene, or 1,4- or 2,6-naphthylene, it being possible for the alkyl and/or the alkoxy substituent to be mono- or polysubstituted by fluorine;
Z denotes -O-.

4. The silane as claimed in claim 3,
6-(3-triethoxysilanylpropylcarbamoyloxy)hexyl (E)-3,4-dimethoxycinnamate;
6-triethoxysilanylhexyl (E)-3,4-dimethoxycinnamate;
6-trichlorosilanylhexyl (E) -3,4-dimethoxycinnamate;
6-triethoxysilanylhexyl (E)-4-[(trans-4-heptylcyclohexyl)methoxy]cinnamate;
6-(3-triethoxysilanylpropylcarbamoyloxy)hexyl (E)-3-(6-heptyloxynaphth-2-yl)acrylate.

5. A crosslinkable mixture comprising at least 2 components, at least one of which is a photocrosslinkable silane derivative of the formula I defined in claim 1.

6. The crosslinkable mixture as claimed in claim 5, which, in addition to one or more photocrosslinkable silane derivatives of the formula I defined in claim 1, contains one or more uncrosslinkable silane derivatives of the general formula II 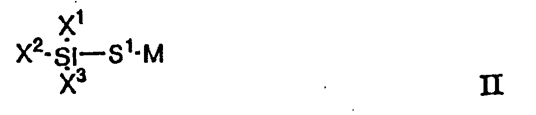 in which
X¹, X², X³ and S¹ have the meaning stated in claim 1 and M denotes lower alkyl, lower alkyl mono- or polysubstituted by fluorine, lower alkoxy, lower alkoxy mono- or polysubstituted by fluorine, or a mesogenic radical of the general formula III 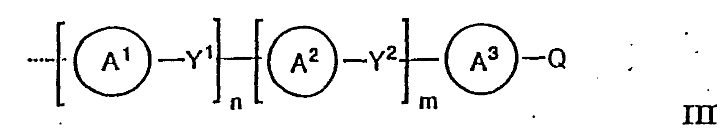 in which
Y¹, Y², m and n have the meaning stated in claim 1 and
A¹, A² and A³ denote unsubstituted or fluorine-, chlorine-, cyano-, alkyl- or alkoxy- substituted phenylene, pyridine-2,5-diyl, pyrimidine-2,5-diyl, 2,6-naphthylene, 1,3-dioxane-2,5-diyl or cyclohexane-1,4-diyl, it being possible for the alkyl and/or the alkoxy substituent to be mono- or polysubstituted by fluorine and not more than one of the rings differing from phenylene or cyclohexylene;
Q denotes lower alkyl or alkoxy in which one or more hydrogen atoms may be replaced by fluorine, or denotes fluorine, chlorine, cyano or nitro.

7. The crosslinkable mixture as claimed in claim 6, wherein
n denotes 0;
m denotes 0 or 1;
A² and A³ denote phenylene or cyclohexylene;
Y¹ and Y² denote a single covalent bond, -CH₂CH₂-, -O-, -CH₂-O-, -O-CH₂-, -CO-O- or -O-OC-;
Q denotes optionally fluorine-substituted lower alkyl or alkoxy, fluorine, chlorine or cyano.

8. The crosslinkable mixture as claimed in claim 7, wherein
m denotes 0;
A³ denotes phenylene or cyclohexylene;
Q denotes optionally fluorine-substituted lower alkyl or alkoxy.

9. The use of photocrosslinkable silane derivatives as claimed in any of claims 1 to 4 for the production of orientation layers for liquid crystals, and their use in optical components, in particular for the production of hybrid layer elements.

10. The use of crosslinkable mixtures as claimed in any of claims 5-8 for the production of orientation layers for liquid crystals, and their use in optical components, in particular for the production of hybrid layer elements.

## Revendications

1. Silanes de formule générale I, 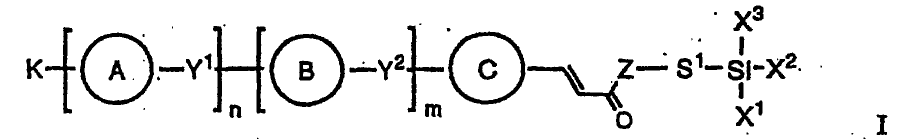 dans laquelle
X¹, X², X³ représentent un alkyle, alcoxy ou halogène, à condition qu'au moins un de ces groupes est soit un alcoxy soit un halogène ;
S¹ représente un motif d'espaceur, comme un groupe alkylène -(CH₂)ᵣ- à chaîne linéaire ou ramifiée, éventuellement une ou plusieurs fois substitué avec fluor, chlore ou cyano, ou une chaîne de formule -(CH₂)ᵣ-L-(CH₂)ₛ-, dans laquelle L représente une liaison simple ou des groupes fonctionnels liant comme O, COO, OOC, NR¹, NR¹-CO-, CO-NR¹, NR¹-COO, OCO-NR¹, NR¹-CO-NR¹, -CH=CH-, -C≡C-, R¹ représente un hydrogène ou un alkyle inférieur et r et s représentent respectivement un nombre entier de 1 à 20 avec la condition que r + s soit ≤ 25 ;
le cycle A représente un phénylène, pyridine-2,5-diyle, pyrimidine-2,5-diyle, 1,3-dioxane-2,5-diyle, cyclohexane-1,4-diyle, pipéridine-1,4-diyle ou pipérazine-1,4-diyle, non substitué ou substitué par fluor, chlore, cyano, alkyle ou alcoxy, dans lequel le substituant alkyle et/ou alcoxy peut être substitué une ou plusieurs fois par fluor ;
le cycle B représente un phénylène, pyridine-2,5-diyle, pyrimidine-2,5-diyle, 1,4- ou 2,6-naphtylène, 1,3-dioxane-2,5-diyle ou cyclohexane-1,4-diyle, non substitué ou substitué avec fluor, chlore, cyano, alkyle ou alcoxy, dans lequel le substituant alkyle et/ou alcoxy peut être substitué une ou plusieurs fois par fluor ;
K représente un hydrogène, fluor, cyano, nitro ou un groupe alkyle, alcoxy, alkyl-COO-, alkyl-CO-NR² ou alkyl-OCO- avec 1 à 20 atomes de carbone, à chaîne linéaire ou ramifiée, éventuellement substitué par fluor, chlore, cyano ou nitro, dans lequel éventuellement un groupe CH₂ ou plusieurs groupes CH₂ non voisins peuvent être remplacés par O, CH=CH, ou C≡C et dans lequel R² représente un hydrogène ou un alkyle inférieur ;
Y¹, Y² représentent indépendamment l'un de l'autre une simple liaison de covalence, -(CH₂)ᵣ, -O-, -CO-, -CO-O-, -O-OC-, -NR³-, -CO-NR³-, -R³N-CO-, -(CH₂)ᵤ-O-, -O-(CH₂)ᵤ-, -(CH₂)ᵤ-NR³- ou NR³-(CH₂)ᵤ-, dans lequel R³ représente un hydrogène ou un alkyle inférieur ;
t représente un nombre entier de 1 à 4 ;
u représente un nombre entier de 1 à 3 ;
m, n représentent indépendamment l'un de l'autre 0 ou 1 ;
le cycle C représente un phénylène, pyrimidine-2,5- ou 3,5-diyle, pyridine-2,5- ou-2,4-diyle ou-2,6-diyle, 2,5-thiophénylène, 2,5-furanylène, 1,4- ou 2,6-naphtylène, non substitué ou substitué par fluor, chlore, cyano, alkyle ou alcoxy, dans lequel le substituant alkyle et/ou alcoxy peut être substitué une ou plusieurs fois par fluor,
Z représente -O- ou -NR⁴-, et R⁴ représente un hydrogène ou alkyle inférieur ;
sous réserve que
K ne soit pas un hydrogène ou halogène, dans le cas où m ainsi que n représentent en même temps le nombre 0 et le cycle C représente un phénylène non substitué.

2. Silanes de formule générale I selon la revendication 1, dans lesquels X¹, X², X³, S¹, K, m et n ont la signification indiquée à la revendication I et
le cycle A représente un phénylène, pyridine-2,5-diyle, pyrimidine-2,5-diyle, ou cyclohexane-1,4-diyle, non substitué ou substitué par fluor, chlore, cyano, alkyle ou alcoxy, dans lequel le substituant alkyle et/ou alcoxy peut être substitué une ou plusieurs fois par fluor ;
le cycle B représente un phénylène, pyridine-2,5-diyle, pyrimidine-2,5-diyle, 1,4- ou -2,6-naphtylène, ou cyclohexane-1,4-diyle, non substitué ou substitué par fluor, chlore, cyano, alkyle ou alcoxy, dans lequel le substituant alkyle et/ou alcoxy peut être substitué une ou plusieurs fois par fluor ;
Y¹, Y² représentent indépendamment l'un de l'autre une simple liaison de covalence, -CH₂-CH₂-, -O-, -CH₂-O-, -O-CH₂-, -CO-O-, ou -O-OC- ;
le cycle C représente un 1,3- ou 1,4-phénylène, pyrimidine-2,5-diyle, pyridine-2,5-diyle, 2,5-furanylène, ou 1,4- ou 2,6-naphtylène, dans lequel le substituant alkyle et/ou alcoxy peut être substitué une ou plusieurs fois par fluor,
Z représente -O-.

3. Silanes de formule générale I selon la revendication 1 ou 2, dans lesquels X¹, X², X³, S¹, K, m et n ont la signification indiquée à la revendication 1 et
n représente 0 ;
le cycle B représente un phénylène, pyridine-2,5-diyle, pyrimidine-2,5-diyle, ou cyclohexane-1,4-diyle, non substitué ou substitué par fluor, chlore, cyano, alkyle ou alcoxy, dans lequel le substituant alkyle et/ou alcoxy peut être substitué une ou plusieurs fois par fluor ;
Y² représente une simple liaison de covalence, -CO-O-, ou -CH₂-O-;
le cycle C représente un 1,3- ou 1,4-phénylène, ou 1,4- ou 2,6-naphtylène, non substitué ou substitué par fluor, chlore, cyano, alkyle ou alcoxy, dans lequel le substituant alkyle et/ou alcoxy peut être substitué une ou plusieurs fois par fluor,
Z représente -O-.

4. Silanes selon la revendication 3:
(E)-3,4-diméthoxycinnamate de 6-(3-triéthoxysilanylpropylcarbamoyloxy)-hexyle ;
(E)-3,4-diméthoxycinnamate de 6-triéthoxysilanylhexyle ;
(E)-3,4-diméthoxycinnamate de 6-trichlorosilanylhexyle ;
(E)-4-[(trans-4-heptylcyclohexyl)méthoxy]cinnamate de 6-triéthoxysilanylhexyle ;
(E)-3-(6-heptyloxynaphtalène-2-yl)acrylate de 6-(3-triéthoxysilanylpropylcarbamoyloxy)hexyle.

5. Mélanges réticulables constitué d'au moins deux composants, parmi lesquels au moins un composant est un dérivé silane photoréticulable de formule I définie à la revendication 1.

6. Mélanges réticulables selon la revendication 5, **caractérisé en ce qu'**ils contiennent en plus d'un ou de plusieurs dérivés silane photoréticulables de formule I définie à la revendication 1, un ou plusieurs dérivés silane non réticulables de formule générale II 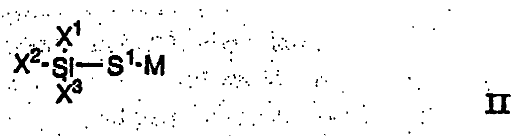 dans laquelle
X¹, X², X³, S¹ ont la signification indiquée à la revendication 1 et M représente un alkyle inférieur, alcoxy inférieur, alkyle inférieur une ou plusieurs fois substitué par fluor, alcoxy inférieur une ou plusieurs fois substitué par fluor ou un reste mésogène de formule générale III, 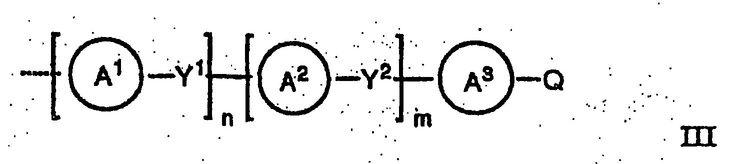
dans laquelle
Y¹, Y², m et n ont la signification indiquée la revendication 1 et
A¹, A², A³ représentent un phénylène, pyridine-2,5-diyle, pyrimidine-2,5-diyle, 2,6-naphtylène, 1,3-dioxane-2,5-diyle, cyclohexane-1,4-diyle, non substitué ou substitué avec fluor, chlore, cyano, alkyle ou alcoxy, dans lequel le substituant alkyle et/ou alcoxy peut être substitué une ou plusieurs fois par fluor et dans lequel au maximum un des cycles est différent du phénylène ou du cyclohexylène ;
Q représente un alkyle ou alcoxy inférieur dans lequel un ou plusieurs atomes d'hydrogène peuvent être remplacés par fluor, chlore, cyano ou nitro.

7. Mélanges réticulables selon la revendication 6, dans lesquels
n représente 0 ;
m représente 0 ou 1 ;
A² et A³ représentent un phénylène ou cyclohexylène ;
Y¹, Y² représentent une simple liaison de covalence, -CH₂CH₂-, -O-, -CH₂-O-, -O-CH₂-, -CO-O- ou -O-OC- ;
Q représente un alkyle ou alcoxy inférieur éventuellement substitué par fluor, chloro ou cyano.

8. Mélanges réticulables selon la revendication 7, dans lesquels
m représente 0 ;
A³ représente un phénylène ou cyclohexylène ;
Q représente un alkyle ou alcoxy inférieur éventuellement substitué par fluor.

9. Utilisation de dérivés silane photoréticulables selon une des revendications 1 à 4 pour la fabrication de couches d'orientation pour cristaux liquides, ainsi que leur utilisation dans des composants optiques, en particulier pour la fabrication d'éléments à couches hybrides.

10. Utilisation de mélanges réticulables selon une des revendications 5-8 pour la fabrication de couches d'orientation pour cristaux liquides, ainsi que leur utilisation dans des composants optiques, en particulier pour la fabrication d'éléments à couches hybrides.
